# EUROPÄISCHE PATENTANMELDUNG

(11) **EP 4 223 815 A1**
(43) Veröffentlichungstag der Anmeldung: **09.08.2023**
(21) Anmeldenummer: 22154963.7
(22) Anmeldetag: 03.02.2022
(51) Int. Cl.: C08G 18/20, C08G 18/18, C08G 18/48, C08G 18/76, C08K 3/04, C08K 3/30, C08K 3/34, C08L 75/04, E04B 1/94

(54) **SCHÄUMBARE MEHRKOMPONENTEN-ZUSAMMENSETZUNG SOWIE GESCHÄUMTESBRANDSCHUTZPROFIL MIT TEMPERATURREGULIERENDEN FÜLLSTOFFEN**

(71) Anmelder: Hilti Aktiengesellschaft, 9494 Schaan (LI)
(72) Erfinder: Schwabbauer, Laura, 80636 München (DE); Förg, Christian, 86807 Buchloe (DE); Paetow, Mario, 86899 Landsberg am Lech (DE); Ober, Andreas, 86916 Kaufering (DE); Bambach, Björn, 86916 Kaufering (DE)
(74) Vertreter: Hilti Aktiengesellschaft Corporate Intellectual Property

(57) **Zusammenfassung**

Die vorliegende Erfindung betrifft eine schäumbare Mehrkomponenten-Zusammensetzung zur Herstellung von geschäumten Brandschutzprofilen sowie aus der erfindungsgemäßen Mehrkomponenten-Zusammensetzung hergestellte Brandschutzprofile. Die schäumbare Mehrkomponenten-Zusammensetzung und das Brandschutzprofil umfassen mindestens einen temperaturregulierenden Füllstoff, der im Brandfall die Feuerwiderstandsdauer verbessert. Ferner betrifft die vorliegende Erfindung die Verwendung von temperaturregulierenden Füllstoffen zur Verbesserung der Feuerwiderstandsdauer von Brandschutzprofilen im Brandfall, insbesondere von Brandschutzprofilen mit einer geringen Dichte.

## Beschreibung

Die vorliegende Erfindung betrifft eine schäumbare Mehrkomponenten-Zusammensetzung zur Herstellung von geschäumten Brandschutzprofilen sowie aus der erfindungsgemäßen Mehrkomponenten-Zusammensetzung hergestellte Brandschutzprofile. Die schäumbare Mehrkomponenten-Zusammensetzung und das Brandschutzprofil umfassen mindestens einen temperaturregulierenden Füllstoff, der im Brandfall die Feuerwiderstandsdauer verbessert. Ferner betrifft die vorliegende Erfindung die Verwendung von temperaturregulierenden Füllstoffen zur Verbesserung der Feuerwiderstandsdauer im Brandfall von Brandschutzprofilen, insbesondere von Brandschutzprofilen mit einer geringen Dichte.

Beim Verlegen von Leitungen, wie z.B. Rohrleitungen, elektrische Leitungen und dergleichen, werden diese durch Durchgangsöffnungen in Bauelementen, insbesondere Gebäudebauteilen, wie Wände und Decken, geführt. Um den Durchtritt von Feuer und Rauchgasen im Brandfall zu verhindern, werden zwischen den Innenwänden der Durchgangsöffnungen und den hindurchgeführten Leitungen Brandschutzabschottungsmaterialen, wie beispielsweise Brandschutzkissen und Brandschutzsteine, eingebracht. Diese bestehen in vielen Fällen aus Polyurethanschäumen. Es kommen aber auch andere Schäume wie beispielsweise auf Basis von Epoxy-Amin zum Einsatz.

In der Patentschrift WO2019/145175 A1 wird eine Baugruppe aus mehreren Brandschutzprofilen beschrieben. Die zur Herstellung der Baugruppe verwendeten Brandschutzprofile haben im ausgehärteten Zustand eine verringerte Dichte von 100 kg/m³ bis 200 kg/m³. Dies hat den besonderen Vorteil, dass die Brandschutzprofile zumindest ein Stück weiter komprimierbar sind, so dass auf ein aufwendiges Zuschneiden beim Abdichten von Durchbrüchen verzichtet werden kann. Eine Verringerung der Dichte kann sich jedoch nachteilig auf die Feuerwiderstandsdauer im Brandfall auswirken. Die WO2019/145175 A1 schlägt daher die Verwendung eines anorganischen Fasermaterials und einer Folie vor. Die Brandschutzprofile sind derart ausgestaltet, dass sie im Brandfall miteinander verbacken.

Es besteht jedoch weiterhin der Bedarf die Installationsvorteile durch geringe Dichten der Brandschutzprofile mit einer verbesserten Feuerwiderstandsdauer zu kombinieren.

Es ist somit Aufgabe der vorliegenden Erfindung eine Lösung bereitzustellen, mit der die Feuerwiderstandsdauer von geschäumten Brandschutzprofilen, insbesondere von geschäumten Brandschutzprofilen mit einer geringen Dichte, im Brandfall zuverlässig verbessert werden kann.

Die der Erfindung zugrundeliegende Aufgabe konnte überraschenderweise durch den Einsatz temperaturregulierender Füllstoffe in einer schäumbaren Mehrkomponenten-Zusammensetzung gelöst werden. Temperaturregulierende Füllstoffe im Sinne der vorliegenden Erfindung bezeichnen solche Füllstoffe, die im Brandfall in der Lage sind, eine "Kühlwirkung" hervorzurufen. Die Kühlwirkung kann durch "aktive Kühlung" oder durch "passive Kühlung" realisiert werden. Aktive Kühlung bezeichnet dabei ein kontrolliertes Herabsetzen der Temperatur, beispielsweise hervorgerufen durch eine chemische Reaktion. Passive Kühlung bezeichnet eine isolierende Wirkung. Der Einsatz temperaturregulierender Füllstoffe in Brandschutzprofilen ermöglicht somit im Brandfall, den Wärmeübertrag auf die dem Feuer abgewandte Seite zu verzögern oder gar zu verhindern.

Ein zweiter Gegenstand der Erfindung ist ferner ein aus der erfindungsgemäßen schäumbaren Mehrkomponenten-Zusammensetzung hergestelltes Brandschutzprofil.

Ein dritter Gegenstand der Erfindung ist auch die Verwendung mindestens eines temperaturregulierenden Füllstoffs in Brandschutzprofilen zur Verbesserung der Feuerwiderstandsdauer.

Zum besseren Verständnis der Erfindung werden die folgenden Erläuterungen der hierin verwendeten Terminologie als sinnvoll erachtet. Im Sinne der Erfindung bedeutet:
- "*Endotherme Füllstoffe*" bezeichnen solche Füllstoffe, die bei Wärmeeintrag (wie bspw. im Brandfall) eine endotherme Reaktion eingehen. Eine endotherme Reaktion ist eine chemische Reaktion, bei der Energie aus der Umgebung aufgenommen. Unter dem Begriff "*Füllstoff*" sind organische und/oder anorganische, vorzugsweise anorganische Verbindungen zu verstehen, die das Volumen der Mehrkomponenten-Zusammensetzung erhöhen;
- "*Wärmeleitfähigkeit*" ist eine Materialeigenschaft und beschreibt das Vermögen eines Materials thermische Energie in Form von Wärme zu transportieren. Die Wärmeleitfähigkeit wird in der Maßeinheit W m⁻¹ K⁻¹⁻ angegeben.
- "*Mehrkomponenten-Zusammensetzung"* ist eine Zusammensetzung, die mehrere voneinander getrennt gelagerte Komponenten umfasst, so dass eine Reaktion der einzelnen Komponenten erst nachdem Mischen aller Komponenten erfolgt. In einer bevorzugten Ausführungsform der Erfindung ist die Mehrkomponenten-Zusammensetzung eine *Zweikomponenten-Zusammensetzung*, die zwei voneinander getrennt gelagerte Komponenten umfasst. Die Zweikomponenten-Zusammensetzung umfasst eine Isocyanatkomponente (A) und eine gegenüber Isocyanatgruppen reaktive Komponente (B), so dass eine Reaktion der in der Isocyanatkomponente (A) enthaltenen Isocyanatgruppen erst nach dem Mischen der beiden Komponenten erfolgt;
- "*Isocyanate*" sind Verbindungen, die eine funktionelle Isocyanatgruppe -N=C=O aufweisen und durch die Struktureinheit R-N=C=O charakterisiert werden (mit R als organischem Rest);
- "*Polyisocyanate*" sind Verbindungen, die mindestens zwei funktionelle Isocyanatgruppen -N=C=O aufweisen; Diisocyanate, die auch unter die Definition von Polyisocyanat fallen, werden beispielsweise durch die Struktur O=C=N-R-N=C=O charakterisiert, wobei R einen beliebigen organischen Rest darstellt;
- "*mittlere NCO-Funktionalität"*, beschreibt die Anzahl an Isocyanatgruppen in der Verbindung; bei einer Mischung aus Isocyanaten beschreibt die "gemittelte NCO-Funktionalität" die gemittelte Anzahl an Isocyanatgruppen in der Mischung und wird nach der Formel: gemittelte NCO-Funktionalität (Mischung) = Σ mittlere NCO-Funktionalität (Isocyanat i) / nᵢ, also die Summe der mittleren NCO-Funktionalität der Einzelkomponente geteilt durch die Anzahl der Einzelkomponenten, ermittelt;
- "*Isocyanatkomponente (A)*" oder auch A-Komponente beschreibt eine Komponente der Mehrkomponenten-Zusammensetzung, welche mindestens ein Polyisocyanat und ggf. mindestens einen Füllstoff und/oder mindestens ein Rheologieadditiv und/oder weitere Additive umfasst;
- "*Amine*" sind Verbindungen mit mindestens einer funktionellen NH-Gruppe, die durch Austausch von einem oder zwei Wasserstoffatomen durch Kohlenwasserstoffgruppen aus Ammoniak abgeleitet sind und die allgemeinen Strukturen RNH₂ (primäre Amine) und R₂NH (sekundäre Amine) aufweisen (siehe: IUPAC Compendium of Chemical Terminology, 2nd ed. (the "Gold Book"), Compiled by A. D. McNaught and A. Wilkinson, Blackwell Scientific Publications, Oxford (1997));
- Als "*Alkohole*" werden organische Verbindungen bezeichnet, bei denen mindestens eine Hydroxylgruppe -OH an ein gesättigtes Kohlenstoffatom gebunden ist. "Polyole" sind Alkohole, die mindestens zwei funktionelle Hydroxylgruppen -OH aufweisen;
- "*NH-Funktionalität*" bzw. "*OH-Funktionalität*" eines Amins bzw. eines Alkohls beschreibt die Anzahl aktiver Wasserstoffatome, die mit einer Isocyanatgruppe reagieren können;
- "*mittlere NH-Funktionalität*" bzw. "mittlere OH-Funktionalität" beschreibt die Anzahl aktiver Wasserstoffatome eines Amins bzw. eines Alkohols, die mit einer Isocyanatgruppe reagieren können, in einem Amin bzw. in einem Alkohol. Diese ergibt sich aus der Anzahl und NH-Funktionalität bzw. OH-Funktionalität der in der Verbindung, enthaltenen Aminogruppen bzw. Hydroxylgruppen.
- "*Gegenüber Isocyanatgruppen reaktionsfähige Reaktivkomponente (B)*" oder auch "*B-Komponente*" ist eine Komponente der Mehrkomponenten-Zusammensetzung, welche mindestens ein gegenüber Isocyanatgruppen reaktives Amin und/oder mindestens einen gegenüber Isocyanatgruppen reaktiven Alkohol umfasst. Die "B-Komponente" kann optional zusätzlich mindestens einen Füllstoff und/oder mindestens ein Rheologieadditiv und/oder weitere Additive umfassen;
- *"ein", "eine", "einer"* als Artikel vor einer chemischen Verbindungsklasse, z.B. vor dem Wort "Isocyanat", dass eine oder mehrere unter diese chemische Verbindungsklasse fallende Verbindungen, z.B. verschiedene Isocyanate gemeint sein können. In einer bevorzugten Ausführungsform ist mit diesem Artikel nur eine einzelne Verbindung gemeint;
- *"mindestens ein"*, *"mindestens eine"*, *"mindestens einer"* zahlenmäßig *"ein oder mehrere".* In einer bevorzugten Ausführungsform ist mit diesem Begriff zahlenmäßig *"ein", "eine", "einer"* gemeint;
- *"enthalten", "umfassen"* und *"beinhalten"*, dass neben den genannten Bestandteilen noch weitere vorhanden sein können. Diese Begriffe sind einschließlich gemeint und umfassen daher auch *"bestehen aus". "Bestehen aus"* ist abschließend gemeint und bedeutet, dass keine weiteren Bestandteile vorhanden sein können. In einer bevorzugten Ausführungsform bedeuten die Begriffe *"enthalten", "umfassen"* und *"beinhalten"* den Begriff *"bestehen aus"*;

### Temperaturregulierende Füllstoffe

Die erfindungsgemäße schäumbare Mehrkomponenten-Zusammensetzung umfasst mindestens einen temperaturregulierenden Füllstoff. Der temperaturregulierende Füllstoff kann in der Isocyanatkomponente (A) und/oder in der B-Komponente eingesetzt werden. In einer bevorzugten Ausführungsform der Erfindung ist der temperaturregulierende Füllstoff mindestens in der B-Komponente enthalten. In einer weiteren bevorzugten Ausführungsform ist der temperaturregulierende Füllstoff lediglich in der B-Komponente vorhanden und die Isocyanatkomponente (A) enthält keinen temperaturregulierenden Füllstoff.

Der Begriff "*temperaturregulierender Füllstoff*" bezeichnet einen Füllstoff, der bei Wärmeeintrag (wie bspw. im Brandfall) zumindest über einen gewissen Zeitraum eine temperaturhemmende Wirkung hat. Der temperaturregulierende Füllstoff wird bevorzugt ausgewählt aus der Gruppe bestehend aus endothermen Füllstoffen, Füllstoffen mit einer Wärmeleitfähigkeit von < 1 W m-1 K-1 sowie Mischungen daraus.

Endotherme Füllstoffe sind solche Füllstoffe, die bei Wärmeeintrag (wie bspw. im Brandfall) eine endotherme Reaktion eingehen. Eine endotherme Reaktion ist eine chemische Reaktion, bei der Energie aus der Umgebung aufgenommen wird.

Vorzugsweise setzt die endotherme Reaktion des eingesetzten endothermen Füllstoffs in einem Temperaturbereich von 70 °C bis 300 °C (sog. Onset-Temperatur bestimmt mittels thermogravimetrischer Analyse (TGA)), vorzugsweise in einem Temperaturbereich von 70 °C bis 200 °C, insbesondere in einem Temperaturbereich von 70 °C bis 115°C, ein. In den angegebenen Temperaturbereichen besteht ein Gleichgewicht zwischen dem angestrebten Kühlmechanismus und der Reaktionstemperatur des dämmschichtbildenden Brandschutzadditivs.

Der endotherme Füllstoff wird vorzugsweise in einem gewichtsprozentualen Bereich von 1 bis 70 bezogen auf das Gesamtgewicht der Mehrkomponenten-Zusammensetzung, insbesondere in einem Anteil von 10 Gew.-% bis 15 Gew.-%, in der erfindungsgemäßen Mehrkomponenten-Zusammensetzung eingesetzt.

Eine Möglichkeit bei der Auswahl der endothermen Füllstoffe stellen kristalline oder teilkristalline anorganische Verbindungen dar, die Hydratwasser (H₂O) enthalten. Hydratwasser oder auch Kristallwasser ist eine Bezeichnung für Wasser, welches im kristallinen oder teilkristallinen Festkörper gebunden vorkommt. Die Freisetzung des Hydratwassers aus der kristallinen/teilkristallinen anorganischen Verbindung erfolgt über eine endotherme Reaktion. Es ist besonders vorteilhaft kristalline oder teilkristalline Feststoffe einzusetzen, die einen möglichst hohen Anteil an Kristallwasser aufweisen. Vorzugsweise beträgt der gewichtsprozentuale Anteil an Kristallwasser an dem eingesetzten kristallinen oder teilkristallinen Feststoff mindestens 15 Gew.-%, vorzugsweise mindestens 20 Gew.%.

Kristalline oder teilkristalline anorganischen Verbindungen mit Kristallwasser werden vorzugsweise ausgewählt aus der Gruppe bestehend aus Ettringiten, geschichteten Doppelhydroxiden (Layered Double Hydroxides, LDH) oder Mischungen daraus.

Der Ausdruck Ettringite im Sinne der vorliegenden Erfindung bezeichnet Calciumaluminiumsulfathydrate. Natürlich vorkommende Ettringitmineralien weisen eine Zusammensetzung mit der Strukturformel Ca₆Al₂[(OH)₁₂(SO₄)₃]·26 H₂O auf. Ettringite können auch synthetisch hergestellt werden. In einer bevorzugten Ausführungsform der Erfindung wird als endothermer Füllstoff synthetisch hergestelltes Ettringit mit der Formel 3 CaO × Al₂O₃ × 3 CaSO₄ × 32 H₂O eingesetzt. Dieses ist beispielsweise kommerziell unter dem Handelsnamen CASUL Pulver H1i erhältlich. Ein positiver endothermer Effekt kann bereits ab einer Menge von mindestens 1 Gew.-% an Ettringit bezogen auf das Gesamtgewicht der schäumbaren Mehrkomponenten-Zusammensetzung beobachtet werden. In einer bevorzugten Ausführungsform beträgt der gewichtsprozentuale Anteil an Ettringit bezogen auf das Gesamtgewicht der schäumbaren Mehrkomponenten-Zusammensetzung 1 Gew.-% bis 50 Gew.-%, vorzugsweise 10 bis 25 Gew.-%.

Der Ausdruck Layered Double Hydroxides (LDHs) bezeichnet eine Verbindungsklasse ionischer Feststoffe, welche eine Schichtstruktur mit der molekularen Struktur [M(II)₁₋ₓM(III)ₓ(OH)₂]^{x+}(Aⁿ⁻_{x/n})·mH₂O aufweist, wobei x eine Zahl von 0,22 bis 0,33 bedeutet, M ein Metal und Aⁿ⁻ ein n valentes Anion. LDHs sind üblicherweise synthetische Materialien abgeleitet vom natürlichen Hydrotalcit, Mg₆Al₂(OH)₁₆[CO₃]·4H₂O. Im Rahmen der vorliegenden Erfindung eignen sich insbesondere solche LDHs, die ein MgO:Al₂O₃ Verhältnis von 70:30 aufweisen. Dieses ist beispielsweise kommerziell erhältlich unter dem Handelsnamen PLURAL MG70. In einer bevorzugten Ausführungsform beträgt der gewichtsprozentuale Anteil an LDH bezogen auf das Gesamtgewicht der Mehrkomponenten-Zusammensetzung 7 Gew.-% bis 50 Gew.-%, vorzugsweise 10 bis 30 Gew.-%.

Ferner können als temperaturregulierende Füllstoffe auch Materialien mit einer geringen Wärmeleitfähigkeit verwenden werden. Im Sinne der vorliegenden Erfindung weisen Materialien mit einer geringen Wärmeleitfähigkeit eine Wärmeleitfähigkeit von < 1 W m^{- 1} K⁻¹ auf. Entsprechende Materialien verleihen dem Brandschutzprofil im Brandfall eine wärmeisolierende Wirkung.

Der Einsatz von Ziegelmehl ist in diesem Zusammenhang besonders vorteilhaft. Ziegelmehl weist eine Wärmeleitfähigkeit von 0,3 bis 0,7 W m⁻¹ K⁻¹ auf.

Ziegelmehl wird durch das Mahlen von Ziegelsteinen gewonnen. Unter dem Begriff des Ziegelsteins im Sinne der vorliegenden Erfindung sind alle Mauerziegel im Sinne der DIN EN 771-1 zu verstehen. Demnach sind Mauerziegel Mauersteine, die aus Ton oder anderen tonhaltigen Stoffen mit oder ohne Sand oder andere Zusätze bei einer ausreichend hohen Temperatur gebrannt werden, um einen keramischen Verbund zu erzielen. Unter dem Begriff des Mauersteins ist ein vorgeformtes Element zur Herstellung von Mauerwerk zu verstehen. Es können auch Keramikklinker oder fein vermahlene Keramik, z.B. Sanitärkeramik, zum Einsatz kommen.

Prinzipiell kann Ziegelmehl in unterschiedlichen Partikelgrößen verwendet werden. Im Anschluss an den Mahlprozess wird das Ziegelmehl üblicherweise einem Siebprozess unterworfen. Durch die Wahl des/der Siebe/s mit einer definierten Maschenweite im Siebprozess kann die Partikelgröße des verwendeten Ziegelmehls auf einen definierten Partikelgrößenbereich eingestellt werden. So weist beispielsweise das Ziegelmehl bei der Verwendung eines Siebes mit einer Maschenweite von 0,3 mm Partikel mit einer Größe von ≤ 0,3 mm auf (Partikelgrößenbereich > 0 bis 0,3 mm). Bedingt durch die unterschiedliche Orientierung der Partikel des Ziegelmehls während des Siebprozesses ist es aber auch möglich, dass ein geringfügiger Anteil der Partikel größer ist als die Maschenweite des Siebes. Dies kommt insbesondere bei asymmetrisch geformten Partikeln zum Tragen (bspw. stäbchenförmig). Um diesem Umstand Rechnung zu tragen, wird zur Spezifikation der Partikelgröße im Rahmen der vorliegenden Erfindung der sogenannten d₉₀-Wert verwendet. Der d₉₀-Wert ist ein Parameter, der angibt, dass 90% des Probenvolumens einen kleineren Partikelgröße aufweisen als den angegebenen Wert. Der d₉₀-Wert wird im Rahmen der vorliegenden Erfindung mittels statischer Lichtstreuung (Gerät: Beckman Coulter LS 13 320 / Dry Powder System) bestimmt. In einer besonderes bevorzugten Ausführungsform hat das Ziegelmehl einen d₉₀-Wert in einem Bereich von 0,5 mm bis 0,01 mm, bevorzugt in einem Bereich von 0,35 mm bis 0,05 mm, weiter bevorzugt in einem Bereich von 0,30 mm bis 0,1 mm.

Kommerziell sind die vorteilhaft zu verwendenden Ziegelmehle beispielsweise von der Fa. Pilosith Gmbh, der Peter Stadler GmbH oder der Kalkladen GmbH erhältlich.

In einer bevorzugten Ausführungsform beträgt der gewichtsprozentuale Anteil an Ziegelmehl bezogen auf das Gesamtgewicht der schäumbaren Mehrkomponenten-Zusammensetzung 1 Gew.-% bis 70 Gew.-%, vorzugsweise 10 bis 40 Gew.-%, weiter bevorzugt 15 bis 25 Gew.-%.

Ferner eignen sich sogenannte Aerogele zum Einsatz als Füllstoffe mit einer geringen Wärmeleitfähigkeit im Rahmen der vorliegenden Erfindung. Unter der Bezeichnung Aerogel sind hochporöse Festkörper zu verstehen, bei denen > 90 % des Volumens aus Poren bestehen. Aerogele weisen üblicherweise eine Wärmeleitfähigkeit im Bereich von ungefähr 0,2 W m⁻¹ K⁻¹ auf. Vorzugsweise werden im Rahmen der vorliegenden Erfindung Aerogele auf Silicatbasis verwendet. Es ist aber auch denkbar, dass Aerogele auf Basis von Kunststoff und/oder Kohlenstoff eingesetzt werden. Kommerziell sind beispielsweise Aerogel Particles P100 der Firma Cabot erhältlich.

Aufgrund des geringen Gewichts der Aerogelpartikel erfolgt die Mengenangabe üblicherweise volumetrisch und nicht gravimetrisch. In einer bevorzugten Ausführungsform der Erfindung werden 7 bis 80 ml, vorzugsweise 20 bis 70 ml, Aerogel pro 100 g der schäumbaren Mehrkomponenten-Zusammensetzung eingesetzt. Der Einsatz einer höheren Menge an Aerogelpartikeln führt dazu, dass bei der Herstellung des geschäumten Brandschutzprofils kein Schaum mehr erhalten wird, sondern eine poröse Masse.

In einer besonders bevorzugten Ausführungsform der Erfindung umfasst die schäumbare Mehrkomponenten-Zusammensetzung sowohl einen endothermen Füllstoff als auch einen Füllstoff mit einer Wärmeleitfähigkeit < 1 W m⁻¹ K⁻¹. Hierdurch wird im Brandfall zunächst der Wärmeeintrag durch die isolierende Wirkung des Füllstoffs mit der geringen Wärmeleitfähigkeit verzögert. Sobald die Reaktionstemperatur des endothermen Füllstoffs erreicht ist, kommt zusätzlich eine "aktive Kühlung" durch die endotherme Reaktion zustande. In einer besonders bevorzugten Ausführungsform werden der endotherme Füllstoff und der Füllstoff mit einer Wärmeleitfähigkeit < 1 W m⁻¹ K⁻¹ in einem gewichtsprozentualen Verhältnis von 1:1 eingesetzt.

### Isocyanatkomponente (A)

Das erfindungsgemäße Mehrkomponenten-System umfasst mindestens eine Isocyanatkomponente (A) und mindestens eine gegenüber Isocyanatgruppen reaktive Komponente (B). Die Isocyanatkomponente (A) und gegenüber Isocyanatgruppen reaktionsfähige Komponente (B) liegen vor der Anwendung reaktionsinhibierend getrennt voneinander vor.

Die Isocyanatkomponente (A) umfasst mindestens ein Polyisocyanat. Als Polyisocyanat können alle dem Fachmann bekannten aliphatischen und/oder aromatischen Isocyanate mit einer mittleren NCO-Funktionalität von 2 oder größer, einzeln oder in beliebigen Mischungen untereinander, verwendet werden. Die NCO-Funktionalität gibt an, wie viele NCO-Gruppen in dem Polyisocyanat vorhanden sind. Polyisocyanat bedeutet dabei, dass zwei oder mehr NCO-Gruppen in der Verbindung enthalten sind.

Geeignete aromatische Polyisocanate sind solche mit aromatisch gebundenen Isocyanatgruppen, wie Diisocyanatobenzole, Touloldiisocyanate, Diphenyldiisocyanate, Diphenylmethandiisocyanate, Diisocyanatonaphathaline, Triphenylmethantriisocyanate, aber auch solche mit Isocyanatgruppen, die über eine Alkylengruppe, wie etwa eine Methylengruppe an einen Aromaten gebunden sind, wie Bis- und Tris-(isocyanatoalkyl)-benzole, -toluole sowie -xylole.

Bevorzugte Beispiele für aromatische Polyisocyanate sind: 1,3-Phenylendiisocyanat, 1,4-Phenylendiisocyanat, 2,4-Toluylendiisocyanat, 2,5-Toluylendiisocyanat, 2,6-Toluylendiisocyanat, 1,3-Xylylendiisocyanat, 1 ,4-Xylylendiisocyanat, Tetramethyl-1,3-xylylendiisocyanat, Tetramethyl-1,4-xylylendiisocyanat, 1,3-Bis(isocyanatomethyl)benzol, 1,4-Bis(isocyanatomethyl)benzol, Ethylphenyldiisocyanat, 2-Dodecyl-1,3-phenylendiisocyanat, 2,4,6-Triisopropyl-*m*-phenylendiisocyanat, 2,4,6-Trimethyl-1,3-phenylendiisocyanat, Xylylendiisocyanat, 1,5-Naphthylendiisocyanat, 3,3'-Dimethyl-4,4'-biphenyldiisocyanat, 3,3'-Dimethoxy-4,4'-biphenyldiisocyanat, 3,3'-Dimethyl-4,4'-biphenyldiisocyanat, Diphenylenmethan-2,4'-diisocyanat, Diphenylenmethan-2,2'-diisocyanat, Diphenylenmethan-4,4'-diisocyanat, Triphenylmethan-4,4',4"-triisocyanat, 5-(*p*-Isocyanatobenzyl)-2-methyl-m-phenylendiisocyanat, 4,4-Diisocyanato-3,3,5,5-tetraethyldiphenylmethan, 5,5'-Ureylendi-o-tolyldiisocyanat, 4-[(5-Isocyanato-2-methylphenyl)methyl]-*m-*phenylendiisocyanat, 4-[(3-isocyanato-4-methylphenyl)methyl]-m-phenylendiisocyanat, 2,2'-Methylen-bis[6-(o-isocyanatobenzyl)phenyl]diisocyanat.

Bevorzugt werden aliphatische Isocyanate verwendet, die ein Kohlenstoffgrundgerüst (ohne die enthaltenen NCO-Gruppen) von 3 bis 30 Kohlenstoffatomen, bevorzugt von 4 bis 20 Kohlenstoffatomen aufweisen.

Beispiele für aliphatische Polyisocyanate sind Bis-(isocyanatoalkyl)ether oder Alkandiisocyanate, wie Methandiisocyanat, Propandiisocyanate, Butandiisocyanate, Pentandiisocyanate, Hexandiisocyanate (z.B. Hexamethylendiisocyanat, HDI), Heptandiisocyanate (z.B. 2,2-Dimethylpentan-1,5- diisocyanat, Octandiisocyanate, Nonandiisocyanate (z.B. Trimethyl-HDI (TMDI) in der Regel als Gemisch der 2,4,4- und 2,2,4-Isomeren), 2-Methylpentan-1,5-diisocyanat (MPDI), Nonantriisocyanate (z.B. 4-Isocyanatomethyl-1,8-octandiisocyanat, 5- Methylnonandiisocyanat), Dekandiisocyanate, Dekantriisocyanate, Undekandiisocyanate, Undekantriisocyanate, Dodecandiisocyanate, Dodecantriisocyanate, 1,3- sowie 1,4-Bis-(isocyanatomethyl)cyclohexane (H₆XDI), 3-Isocyanatomethyl-3,5,5-trimethylcyclohexylisocyanat (Isophorondiisocyanat, IPDI), Bis- (4-isocyanatocyclohexyl)methan (H₁₂MDI), Bis-(isocyanatomethyl)norbornan (NBDI) oder 3(4)-Isocyanatomethyl-1-methyl-cyclohexylisocyanat (IMCI), Octagydro-4,7- methano-1 H-indendiemthyldiisocyanat, Norbornendiisocyanat, 5-Isocyanato-1-(isocyanatomethyl)-1,3,3-trimethylcyclohexan, Ureylenbis(p-phenylenmethylene-p-phenylen)diiscoyanat.

Besonders bevorzugte Isocyanate sind Hexamethylendiisocyanat (HDI), Trimethyl-HDI (TMDI), Pentandiisocyanat (PDI), 2-Methylpentan-1 ,5-diisocyanat (MPDI), Isophorondiisocyanat (IPDI), 1 ,3- sowie 1,4-Bis(isocyanatomethyl)cyclohexan (H₆XDI), Bis(isocyanatomethyl)norbornan (NBDI), 3(4)-Isocyanatomethyl-1-methyl-cyclohexylisocyanat (IMCI) und/oder 4,4'-Bis(iso-cyanatocyclohexyl)methan (H₁₂MDI) oder Gemische dieser Isocyanate.

Noch weiter bevorzugt liegen die Polyisocyanate als Präpolymere, Biurete, Isocyanurate, Iminooxadiazindione, Uretdione und/oder Allophanate vor, die durch Oligomerisierung von difunktionellen Isocyanaten oder durch Umsetzung der Isocyanatverbindungen mit Polyolen oder Polyaminen, einzeln oder als Gemisch, hergestellt werden können, und die eine mittlere NCO-Funktionalität von 2 oder größer aufweisen.

Beispiele für geeignete, kommerziell erhältliche Isocyanate sind Desmodur^{®} N 3900, Desmodur^{®} N 100, Desmodur^{®} Ultra N 3200, Desmodur^{®} Ultra N 3300, Desmodur^{®} Ultra N 3600, Desmodur^{®} N 3800, Desmodur^{®} XP 2675, Desmodur^{®} 2714, Desmodur^{®} 2731, Desmodur^{®} N 3400, Desmodur^{®} XP 2679, Desmodur^{®} XP 2731, Desmodur^{®} XP 2489, Desmodur^{®} E 3370, Desmodur^{®} XP 2599, Desmodur^{®} XP 2617, Desmodur^{®} XP 2406, Desmodur^{®} XP 2551 , Desmodur^{®} XP 2838, Desmodur^{®} XP 2840, Desmodur^{®} VL, Desmodur^{®} VL 50, Desmodur^{®} VL 51 , Desmodur^{®} ultra N 3300, Desmodur^{®} eco N 7300, Desmodur^{®} E23, Desmodur^{®} E XP 2727, Desmodur^{®} E 30600, Desmodur^{®} E 2863XPDesmodur^{®} H, Desmodur^{®} VKS 20 F, Desmodur^{®} 44V20I, Desmodur^{®} 44P01, Desmodur^{®} 44V70 L, Desmodur^{®} N3400, Desmodur^{®} N3500 (jeweils erhältlich von Covestro AG), Tolonate^{™} HDB, Tolonate^{™} HDB-LV, Tolonate^{™} HDT, Tolonate^{™} HDT-LV, Tolonate^{™} HDT-LV2 (erhältlich von Vencorex), Basonat^{®} HB 100, Basonat^{®} HI 100, Basonat^{®} HI 2000 NG (erhältlich von BASF), Takenate^{®} 500, Takenate^{®} 600, Takenate^{®} D-132N(NS), Stabio^{®} D-376N (jeweils erhältlich von Mitsui), Duranate^{®} 24A-100, Duranate^{®} TPA-100, Duranate^{®} TPH-100 (jeweils erhältlich von Asahi Kasai), Coronate^{®} HXR, Coronate^{®} HXLV, Coronate^{®} HX, Coronate^{®} HK, (jeweils erhältlich von Tosoh).

Die gewichtsprozentualen Mengenverhältnisse der Isocyanatverbindung und der gegenüber Isocyanatgruppen reaktionsfähigen Gruppe in der B-Komponente wird bevorzugt so gewählt, dass das Äquivalentverhältnis von Isocyanatgruppen zu gegenüber der Isocyanatgruppe reaktionsfähigen Gruppen zwischen 0,3 und 1,7, bevorzugt zwischen 0,5 und 1,5 und stärker bevorzugt zwischen 0,9 und 1,4 liegt.

### Gegenüber Isocyanatgruppen reaktionsfähige Komponente (B)

Erfindungsgemäß umfasst die schäumbare Mehrkomponenten-Zusammensetzung mindestens eine gegenüber Isocyanatgruppen reaktionsfähige Komponente (B). Bevorzugt umfasst die gegenüber Isocyanatgruppen reaktionsfähige Komponente mindestens eine Verbindung ausgewählt aus der Gruppe bestehend aus Verbindungen mit mindestens zwei Aminogruppe, Polyolen und Kombinationen davon.

Als verwendbare Amine kommen alle Verbindungen mit mindestens zwei Aminogruppen in Betracht, wobei die Aminogruppen primäre und/oder sekundäre Aminogruppen sind, die in der Lage sind, mit Isocyanatgruppen unter Bildung einer Harnstoffgruppe (-N-C(O)-N) zu reagieren, wobei diese Verbindungen dem Fachmann grundsätzlich bekannt sind.

Gemäß einer bevorzugten Ausführungsform ist das gegenüber Isocyanat-Gruppen reaktive Amin aus der aus aliphatischen, alicyclischen, araliphatischen und aromatischen Aminen bestehenden Gruppe ausgewählt.

Gegenüber Isocyanatgruppen reaktive Amine sind dem Fachmann grundsätzlich bekannt. Beispiele für gegenüber Isocyanatgruppen reaktive geeignete Amin sind im Folgenden angegeben, ohne jedoch den Umfang der Erfindung einzuschränken. Diese können sowohl einzeln als auch in beliebigen Mischungen untereinander verwendet werden. Beispiele sind: 1,2-Diaminoethan(ethylendiamin), 1,2-Propandiamin, 1,3-Propandiamin, 1,4-Diaminobutan, 2,2-Dimethyl-1,3-propandiamin(neopentandiamin), Diethylaminopropylamin (DEAPA), 2-Methyl-1,5-diaminopentan, 1,3-Diaminopentan, 2,2,4- oder 2,4,4-Trimethyl-1,6-diaminohexan und Gemische davon (TMD), 1,3-Bis(aminomethyl)-cyclohexan, 1,2-Bis(aminomethyl)cyclohexan, Hexamethylendiamin (HMD), 1,2- und 1,4-Diaminocyclohexan (1,2-DACH und 1,4-DACH), Bis(4-amino-3-methylcyclohexyl)methan, Diethylentriamin (DETA), 4-Azaheptan-1,7-diamin, 1,11-Diamino-3,6,9-trioxundecan, 1,8-Diamino-3,6-dioxaoctan, 1,5-Diamino-methyl-3-azapentan, 1,10-Diamino-4,7-dioxadecan, Bis(3-aminopropyl)amin, 1,13-Diamino-4,7,10-trioxatridecan, 4-Aminomethyl-1,8-diaminooctan, 2-Butyl-2-ethyl-1,5-diaminopentan, N,N-Bis-(3-aminopropyl)methylamin, Triethylentetramin (TETA), Tetraethylenpentamin (TEPA), Pentaethylenhexamin (PEHA), 1,3-Benzoldimethanamin (m-Xylylendiamin, mXDA), 1,4-Benzoldimethanamin (p-Xylylendiamin, pXDA), 5-(Aminomethyl)bicyclo[[2.2.1]hept-2-yl]methylamin (NBDA, Norbornandiamin), Dimethyldipropylentriamin, Dimethylaminopropyl-aminopropylamin (DMAPAPA), 2,4-Diamino-3,5-dimethylthiotoluol (Dimethylthio-toluoldiamin, DMTDA), 3-Aminomethyl-3,5,5-trimethylcyclohexylamin (Isophorondiamin (IPDA)), Diaminodicyclohexylmethan (PACM), Diethylmethylbenzoldiamin (DETDA), 3,3'-Diaminodiphenylsulfon (Dapson), gemischte polycyclische Amine (MPCA) (z.B. Ancamine 2168), Dimethyldiaminodicyclohexylmethan (Laromin C260), 2,2-Bis(4-aminocyclohexyl)propan, (3(4),8(9)Bis(aminomethyl)tricyclo[5.2.1.02,6]decan (Isomerengemisch, tricyclischer primärer Amine; TCD-Diamin), Methylcyclohexyl-diamin (MCDA), N,N'-Diaminopropyl-2-methyl-cyclohexan-1,3-diamin, N,N'-Diaminopropyl-4-methyl-cyclohexan-1,3-diamin, N-(3-Aminopropyl)cyclohexylamin, und 2-(2,2,6,6-tetramethylpiperidin-4-yl)propan-1 ,3-diamin.

Als Amine können auch sogenannte Polyetherpolyamine verwendet werden. Die Polyetherpolyamine, auch alkoxylierte Polyamine oder Polyoxyalkenpolyamine genannt, umfassen Verbindungen mit aliphatisch gebundenen Aminogruppen, d.h. die Aminogruppen sind an die Enden eines Polyethergerüstes angebunden. Das Polyethergerüst basiert auf reinen oder gemischten Polyalkylenoxideinheiten, wie Polyethylenglykol(PEG), Polypropylenglykol(PPG). Das Polyethergerüst ist durch Umsetzung eines Dioder Trialkoholinitiators mit Ethylenoxid (EO) und/oder Propylenoxid (PO) und anschließender Umwandlung der terminalen Hydroxylgruppen zu Aminogruppen erhältlich. 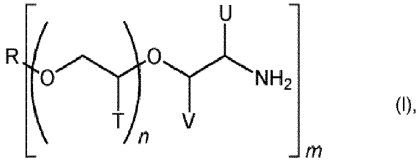 in der
- R:: der Rest eines Initiators für die Oxyalkylierung ist mit 2 bis 12 Kohlenstoffatomen und 2 bis 8 Gruppen mit aktiven Wasserstoffatomen,
- T:: Wasserstoff oder eine C₁-C₄-Alkylgruppe darstellt,
- V und U:: unabhängig voneinander Wasserstoff oder T sind,
- n:: ein Wert zwischen 0 und 100 ist,
- m:: eine ganze Zahl zwischen 2 und 8 ist, wobei m der Anzahl der Gruppen mit einem aktiven Wasserstoffatom entspricht, die ursprünglich in dem Initiator für die Oxyalkylierung enthalten waren.

In weiteren Ausführungsformen hat n einen Wert zwischen 35 und 100 oder weniger als 90, weniger als 80 und weniger als 70 oder weniger als 60. In einer weiteren Ausführungsform hat R 2 bis 6 oder 2 bis 4 oder 3 Gruppen mit aktiven Wasserstoffatomen, insbesondere Hydroxylgruppen. In einer anderen Ausführungsform ist R ein aliphatischer Initiator mit mehreren aktiven Wasserstoffatomen. In einer weiteren Ausführungsform sind T, U und V jeweils Methylgruppen.

Beispiele geeigneter Polyetheramine sind die von Huntsman Corporation unter der Marke JEFFAMINE^{®} vertriebenen Polyetheramine der D-, ED-, EDR- und T- Serien, wobei die D-Serien Diamine und die T-Serie Triamine umfassen, die E-Serien Verbindungen umfassen, die ein Gerüst aufweisen, das im Wesentlichen aus Polyethylenglykol besteht, und die R-Serien hoch-reaktive Amine umfassen.

Die Produkte der D-Serie umfassen Amino-terminierte Polypropylenglykole der allgemeinen Formel (II), 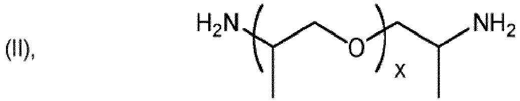 in der x eine Zahl mit einem Mittelwert zwischen 2 und 70 ist. Kommerziell erhältliche Produkte aus dieser Serie sind JEFFAMINE^{®} D-230 (n ~ 2,5 / Mw 230), JEFFAMINE^{®} D-400 (n ~ 6,1 / Mw = 430), JEFFAMINE^{®} D-2000 (n ~ 33/ Mw2.000) und JEFFAMINE^{®} D-4000 (n ~ 68 / MW 4.000).

Die Produkte der ED-Serien umfassen Amino terminierte Polyether auf der Basis eines im Wesentlichen Polyethylenglykol-Gerüstes mit der allgemeinen Formel (III), 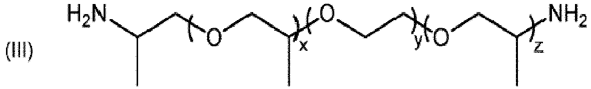 in der y eine Zahl mit einem Mittelwert zwischen 2 und 40 ist und x+z eine Zahl mit einem Mittelwert zwischen 1 und 6 ist. Kommerziell erhältliche Produkte aus dieser Serie sind: JEFFAMINE^{®} HK511 (y = 2,0; x + z ~ 1 ,2/Mw 220), JEFFAMINE^{®} ED-600 (y ~ 9,0; x + z -3,6 / Mw 600), JEFFAMINE^{®} ED-900 (y ~ 12,5; x + z ~ 6,0 / Mw 900) und JEFFAMINE^{®} ED-2003 (y ~ 39; x + z ~ 6,0 / Mw 2.000).

Die Produkte der EDR-Serien umfassen Amino terminierte Polyether mit der allgemeinen Formel (IV) 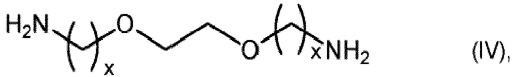 in der x eine ganze Zahl zwischen 1 und 3 ist. Kommerziell erhältliche Produkte aus dieser Serie sind: JEFFAMINE^{®} DER-148 (x = 2 / Mw 148) und JEFFAMINE^{®} DER-176 (x = 3 / Mw 176).

Die Produkte der T-Serien umfassen Triamine, die durch Reaktion von Propylenoxid mit einem Triol-Initiator und anschließender Aminierung der terminalen Hydroxylgruppen erhalten werden und die allgemeine Formel (V) aufweisen oder Isomere davon 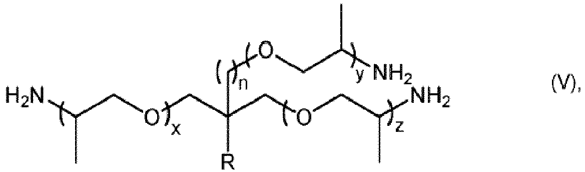 in der R Wasserstoff oder eine C₁-C₄-Alkylgruppe, bevorzugt Wasserstoff oder Ethyl ist, n 0 oder 1 ist und x + y + z die Anzahl der Mole an Propylenoxideinheiten entspricht, wobei x + y + z eine ganze Zahl zwischen etwa 4 und etwa 100, insbesondere zwischen etwa 5 und etwa 85 ist. Kommerziell erhältliche Produkte aus dieser Serie sind: JEFFAMINE^{®} T-403 (R = C₂H₅; n = 1; x+y+z = 5-6 / Mw 440), JEFFAMINE^{®} T-3000 (R = H; n = 0; x+y+z = 50 / Mw 3.000) und JEFFAMINE^{®} T-5000 (R = H; n = 0; x + y + z = 85 / Mw 5.000).

Ferner sind die sekundären Amine der SD- und der ST-Serien geeignet, wobei die SD-Serien sekundäre Diamine und die ST-Serien sekundäre Triamine umfassen, die aus den obigen Serien durch reduktive Alkylierung der Aminogruppen erhalten werden, in dem die Amino-Endgruppen mit einem Keton, z.B. Aceton umgesetzt und anschließend reduziert werden, so dass sterisch gehinderte sekundäre Amino-Endgruppen mit der allgemeinen Formel (VI) erhalten werden:

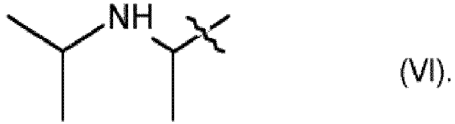

Kommerziell erhältliche Produkte aus dieser Serie sind: JEFFAMINE^{®} SD-231 (Ausgangsprodukt D230 / Mw 315), JEFFAMINE^{®} SD-401 (Ausgangsprodukt D-400 / Mw 515), JEFFAMINE^{®} SD-2001 (Ausgangsprodukt D-2000 / Mw 2050) und JEFFAMINE ST-404 (Ausgangsprodukt T-403 / Mw 565).

In einer Ausführungsform der Erfindung werden als Verbindungen mit mindestens zwei Aminogruppen Polyasparaginsäureester, verwendet, da deren Reaktivität gegenüber Isocyanatgruppen verglichen mit den oben beschriebenen anderen Polyaminen deutlich reduziert ist.

Geeignete Polyasparaginsäureester sind unter Verbindungen der allgemeinen Formel (VII) ausgewählt, 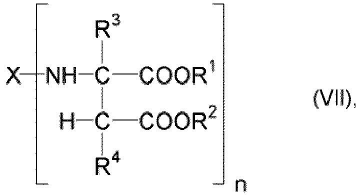 in der R¹und R²gleich oder verschieden sein können und für organische Reste stehen, die gegenüber Isocyanatgruppen inert sind,
R³ und R⁴ gleich oder verschieden sein können und für Wasserstoff oder organische Reste stehen, die gegenüber Isocyanatgruppen inert sind, X für einen n-wertigen organischen Rest steht, der gegenüber Isocyanatgruppen inert ist, und n für eine ganze Zahl von mindestens 2, bevorzugt von 2 bis 6, mehr bevorzugt von 2 bis 4 und am meisten bevorzugt von 2 steht. R¹ und R² stehen bevorzugt unabhängig voneinander für eine, gegebenenfalls substituierte Kohlenwasserstoffgruppe, bevorzugt eine C₁-C₉-Kohlenwasserstoffgruppe und mehr bevorzugt eine Methyl-, Ethyl- oder Butylgruppe und R³ und R⁴ bevorzugt jeweils für Wasserstoff.

In einer Ausführungsform steht X für eine n-wertige Kohlenwasserstoffgruppe, die durch Entfernen der Aminogruppen von einem aliphatischen oder araliphatischen Polyamin, bevorzugt durch Entfernen der primären Aminogruppen aus einem aliphatischen Polyamin, besonders bevorzugt Diamin erhalten wird. Der Begriff Polyamin umfasst in diesem Zusammenhang Verbindungen mit zwei oder mehreren primären und gegebenenfalls zusätzlichen sekundären Aminogruppen, wobei die primären Aminogruppen bevorzugt endständig sind.

In einer bevorzugten Ausführungsform steht X für einen Rest, wie er durch Entfernung der primären Aminogruppen aus 1,4-Diaminobutan, 1,6-Diaminohexan, 2,2,4- oder 2,4,4-Trimethyl-1 ,6-diaminohexan, 1-Amino-3,3,5-trimethyl-5-amionmethyl-cyclohexan, 4,4'-Diamino-dicyclohexylmethan oder 3,3'-Dimethyl-4,4'-diamino-dicyclohexylmethan, Diethylentriamin und Triethylentetramin erhalten wird und wobei n in Formel (VII) für die Zahl 2 steht.

Gemische von Polyasparaginsäureestern können ebenfalls verwendet werden.

Beispiele geeigneter Polyasparaginsäureester werden von der Covestro AG unter der Marke DESMOPHEN^{®} vertrieben. Kommerziell erhältliche Produkte sind beispielsweise: DESMOPHEN^{®} NH 1220, DESMOPHEN^{®} NH 1420 und DESMOPHEN^{®} NH 1520. Die beschriebenen Verbindungen mit mindestens zwei Aminogruppen können je nach gewünschter Reaktivität einzeln oder als Gemisch verwendet werden. Dabei können insbesondere die Polyamine als verbrückende Verbindungen dienen, wenn diese zusätzlich zu den Polyetherpolyaminen oder den Polyasparaginsäureestern verwendet werden.

Werden als gegenüber Isocyanatverbindungen reaktionsfähige Komponente Polyole eingesetzt, kommen alle Verbindungen mit zwei oder mehreren Hydroxylgruppen in Betracht. Bevorzugt ist das Polyol aufgebaut aus einem Grundgerüst aus Polyester, Polyether, Polyurethan und/oder Alkanen oder Mischungen aus diesen. Das Grundgerüst kann linear oder verzweigt aufgebaut sein und die funktionellen Hydroxylgruppen terminal und/oder entlang der Kette enthalten.

In einer bevorzugten Ausführungsform enthält das Polyol ein oder mehrere Polyesterpolyole. Bevorzugt sind die Polyesterpolyole ausgewählt aus Kondensationsprodukten von Di- und Polycarbonsäuren, z.B. aromatische Säuren wie Phthalsäure und Isophthalsäure, aliphatische Säuren wie Adipinsäure und Maleinsäure, cycloaliphatischen Säuren, wie Tetrahydrophthalsäure und Hexahydrophthalsäure, und/oder deren Derivaten, wie Anhydride, Ester oder Chloride, und einer überschüssigen Menge aus mehrfachfunktionellen Alkoholen, z.B. aliphatische Alkohole wie Ethandiol, 1,2-Propandiol, 1,6-Hexandiol, Neopentylglykol, Glycerin, Trimethylolpropan und cycloaliphatische Alkohole wie 1,4-Cyclohexandimethanol.

Weiterhin sind die Polyesterpolyole ausgewählt aus Polyacrylatpolyolen, wie Copolymerisate von Estern der Acryl- und/oder Methacrylsäure, wie z.B. Ethylacrylat, Butylacrylat, Methylmethacrylat mit zusätzlichen Hydroxylgruppen, und Styrol, Vinylester und Maleinsäureester. Die Hydroxylgruppen in diesen Polymeren werden über funktionalisierte Ester der Acryl- und Methacrylsäure, z.B. Hydroxyethylacrylat, Hydroxyethylmethacrylat und/oder Hydroxypropylmethacrylat eingeführt.

Weiterhin sind die Polyesterpolyole ausgewählt aus Polycarbonatpolyolen. Verwendbare Polycarbonatpolyole sind Hydroxylgruppen aufweisende Polycarbonate, wie zum Beispiel Polycarbonatdiole. Diese sind durch Reaktion von Kohlensäure oder Kohlensäurederivaten mit Polyolen oder durch die Copolymerisation von Alkylenoxiden, wie zum Beispiel Propylenoxid, mit CO₂ erhältlich. Zusätzlich oder alternativ sind die eingesetzten Polycarbonate aus linearen aliphatischen Ketten aufgebaut. Geeignete Kohlensäurederivate sind etwa Kohlensäurediester, wie z.B. Diphenylcarbonat, Dimethylcarbonat oder Phosgen.

Statt oder zusätzlich zu reinen Polycarbonatdiolen können auch Polyetherpolycarbonatdiole eingesetzt werden

Weiterhin sind die Polyesterpolyole ausgewählt aus Polycaprolactonpolyolen, hergestellt durch ringöffnende Polymerisation von ε-Caprolacton mit mehrfachfunktionellen Alkoholen, wie Ethylenglykol, 1 ,2-Propandiol, Glycerin und Trimethylolpropan.

Stärker bevorzugt sind außerdem Polyetherpolyole ausgewählt aus Additionsprodukten von z.B. Ethylen und/oder Propylenoxid und mehrfachfunktionellen Alkoholen wie z.B. Ethylenglykol, 1 ,2-Propandiol, Glycerin und/oder Trimethylolpropan.

Stärker bevorzugt sind außerdem Polyurethanpolyole, hergestellt aus Polyaddition von Diisocyanaten mit überschüssigen Mengen Di- und/oder Polyolen.

Stärker bevorzugt sind außerdem di- oder mehrfunktionelle Alkohole, ausgewählt aus C₂-C₁₀-Alkoholen mit den Hydroxylgruppen an den Enden und/oder entlang der Kette.

Am stärksten bevorzugt sind oben genannte Polyesterpolyole, Polyetherpolyole und C₂-C₁₀-Alkohole, die di- und/oder trifunktionell und/oder tetrafunktionell sind.

Beispiele geeigneter Polyesterpolyole umfassen DESMOPHEN^{®} 1100, DESMOPHEN^{®} 1652, DESMOPHEN^{®} 1700, DESMOPHEN^{®} 1800, DESMOPHEN^{®} 670, DESMOPHEN^{®} 800, DESMOPHEN^{®} 850, DESMOPHEN^{®} VP LS 2089, DESMOPHEN^{®} VP LS 2249/1 , DESMOPHEN^{®} VP LS 2328, DESMOPHEN^{®} VP LS 2388, DESMOPHEN^{®} XP 2488 (Covestro AG), K-FLEX XM-360, K-FLEX 188, K-FLEX XM-359, K-FLEX A308 und K-FLEX XM- 332 (King Industries).

Beispiele geeigneter kommerziell erhältlicher Polyetherpolyole umfassen: ACCLAIM^{®} POLYOL 12200 N, ACCLAIM^{®} POLYOL 18200 N, ACCLAIM^{®} POLYOL 4200, ACCLAIM^{®} POLYOL 6300, ACCLAIM^{®} POLYOL 8200 N, ARCOL^{®} POLYOL 1070, ARCOL^{®} POLYOL 1 105 S, DESMOPHEN^{®} 1 1 10 BD, DESMOPHEN^{®} 1 11 1 BD, DESMOPHEN^{®} 1262 BD, DESMOPHEN^{®} 1380 BT, DESMOPHEN^{®} 1381 BT, DESMOPHEN^{®} 1400 BT, DESMOPHEN^{®} 2060 BD, DESMOPHEN^{®} 2061 BD, DESMOPHEN^{®} 2062 BD, DESMOPHEN^{®} 3061 BT, DESMOPHEN^{®} 401 1 T, DESMOPHEN^{®} 4028 BD, DESMOPHEN^{®} 4050 E, DESMOPHEN^{®} 5031 BT, DESMOPHEN^{®} 5034 BT, DESMOPHEN^{®} 10WF15, DESMOPHEN^{®} 10WF16, DESMOPHEN^{®} 10WF18, DESMOPHEN^{®} 5168T und DESMOPHEN^{®} 5035 BT (Bayer; Covestro); Lupranol 2043, Lupranol 2048, Lupranol 2090, Lupranol 2092, Lupranol 2095, Pluriol E600 (BASF); Voranol CP 755, Voranol RA 800, Voranol CP 6001 , Voranol EP 1900 (Dow) oder Mischungen aus Polyester und Polyetherpolyolen wie WorleePol 230 (Worlee).

Beispiele geeigneter Alkohole umfassen Ethandiol, Propandiol, Propantriol, Butandiol, Butantriol, Pentandiol, Pentantriol, Hexandiol, Hexantriol, Heptandiol; Heptantriol, Octandiol, Octantriol, Nonandiol, Nonantriol, Decandiol und Decantriol.

In einer bevorzugten Ausführungsform umfasst die gegenüber Isocyanatgruppen reaktionsfähige Komponente (B) eine Mischung aus einer oder mehreren Verbindungen mit zwei Aminogruppen und einen oder mehreren Polyolen. Besonders bevorzugt ist eine Mischung aus einem oder mehreren Polyolen mit einem oder mehreren Polyasparaginsäureestern., wobei insbesondere eine Mischung aus einem oder mehreren Polyasparaginsäureestern mit Triolen und/oder Tetraoien bevorzugt ist.

Bevorzugt wird ein Katalysator für die Reaktion der Isocyanatverbindung mit der gegenüber Isocyanatgruppen reaktionsfähigen Komponente verwendet. Vorzugsweise wird der Katalysator unter Aminen, zinnhaltigen Verbindungen, bismuthaltigen Verbindungen, zirkoniumhaltigen Verbindungen, aluminiumhaltigen Verbindungen oder zinkhaltigen Verbindungen ausgewählt ist. Bevorzugt handelt es sich hierbei um Zinnoctoat, Zinnoxalat, Zinnchlorid, Dioctylzinndi-(2-ethylhexanoat), Dioctylzinndilaurat, Dioctylzinndithioglykolat, Dibutylzinndilaurat, Monobutylzinntris-(2- ethylhexanoat), Dioctylzinndineodecanoat, Dibutylzinndineodecanoat, Dibutylzinndiacetat, Dibutylzinnoxid, Monobutylzinndihydroxychlorid, Organozinnoxid, Monobutylzinnoxid, Dioctylzinndicarboxylat, Dioctylzinnstannoxan, Bismutcarboxylat, Bismutoxid, Bismutneodecanoat, Zinkneodecanoat, Zinkoctoat, Zinkacetylacetonat, Zinkoxalat, Zinkacetat, Zinkcarboxylat, Aluminiumchelatkomplex, Zirkoniumchelatkomplex, Dimethylaminopropylamin, /V,/V-Dimethylcyclohexylamin, N,N- Dimethylethanolamin, N-( 3- Dimethylaminopropyl)-/V,/V-diisopropanolamin, N- Ethylmorpholin, /V-Methylmorpholin, Pentamethyldiethylentriamin und/oder Triethylendiamin. Beispiele geeigneter Katalysatoren sind Borchi^{®} Kat 24, Borchi^{®} Kat 320, Borchi^{®} Kat 15 (Borchers), TIB KAT 129, TIB KAT P129, TIB KAT 160, TIB KAT 162, TIB KAT 214, TIB KAT 216, TIB KAT 218, TIB KAT 220, TIB KAT 232, TIB KAT 248, TI B KAT 248 LC, TI B KAT 250, TIB KAT 250, TIB KAT 256, TIB KAT 318, TIB Si 2000, TIB KAT 716, TIB KAT 718, TIB KAT 720, TIB KAT 616, TIB KAT 620, TIB KAT 634, TIB KAT 635, (TIB Chemicals), K-KAT^{®} XC-B221 , K-KAT^{®} 348, K-KAT^{®} 4205, K- KAT^{®} 5218, K-KAT^{®} XK-635, K-KAT^{®} XK-639, K-KAT^{®} XK-604, K-KAT^{®} XK-618 (King Industries), JEFFCAT^{®} DMAPA, JEFFCAT^{®} DMCHA, JEFFCAT^{®} DMEA, JEFFCAT^{®} DPA, JEFFCAT^{®} NEM, JEFFCAT^{®} NMM, JEFFCAT^{®} PMDETA, JEFFCAT^{®} TD-100 (Huntsman) und DABCO 33LV (Sigma Aldrich). Besonders bevorzugt umfasst die Mehrkomponenten-Zusammensetzung mindestens eine zinnhaltige Verbindung als Katalysator.

Erfindungsgemäß enthält die Zusammensetzung ein dämmschichtbildendes Additiv, wobei das Additiv sowohl eine einzelne Verbindung als auch ein Gemisch von mehreren Verbindungen umfassen kann.

Zweckmäßig werden als dämmschichtbildende Additive solche eingesetzt, die durch die Bildung einer sich unter Hitzeeinwirkung bildenden, aufgeblähten, isolierenden Schicht aus schwerentflammbaren Material, die das Substrat vor Überhitzung schützt und dadurch die Veränderung der mechanischen und statischen Eigenschaften tragender Bauteile durch Hitzeeinwirkung verhindert oder zumindest verzögert, wirken. Die Bildung einer voluminösen, isolierenden Schicht, nämlich einer Ascheschicht, kann durch die chemische Reaktion eines Gemisches aus entsprechenden aufeinander abgestimmter Verbindungen, die bei Hitzeeinwirkung miteinander reagieren, gebildet werden. Solche Systeme sind dem Fachmann unter dem Begriff chemische Intumeszenz bekannt und können erfindungsgemäß eingesetzt werden. Alternativ kann die voluminöse, isolierende Schicht durch physikalische Intumeszenz gebildet werden. Beide Systeme können jeweils alleine oder zusammen als Kombination erfindungsgemäß eingesetzt werden.

Für die Ausbildung einer intumeszierenden Schicht durch chemische Intumeszenz sind allgemein wenigstens drei Komponenten erforderlich, ein Kohlenstofflieferant, ein Dehydrierungskatalysator und ein Gasbildner, die häufig in einem Bindemittel enthalten sind. Bei Hitzeeinwirkung erweicht das Bindemittel und die Brandschutzadditive werden freigesetzt, so dass diese im Falle der chemischen Intumeszenz miteinander reagieren oder im Falle der physikalischen Intumeszenz sich aufblähen können. Durch thermische Zersetzung wird aus dem Dehydrierungskatalysator die Säure gebildet, die als Katalysator für die Carbonifizierung des Kohlenstofflieferanten dient. Gleichzeitig zersetzt sich der Gasbildner thermisch unter Bildung inerter Gase, die ein Aufblähen des carbonisierten (verkohlten) Materials und gegebenenfalls das erweichte Bindemittel unter Bildung eines voluminösen, isolierenden Schaums bewirkt.

In einer Ausführungsform der Erfindung, in der die isolierende Schicht durch chemische Intumeszenz gebildet wird, umfasst das dämmschichtbildende Additiv mindestens einen Kohlenstoffgerüstbildner sofern das Bindemittel nicht als solcher verwendet werden kann, mindestens einen Säurebildner, mindestens ein Gasbildner und mindestens einen anorganischen Gerüstbildner. Die Komponenten des Additivs werden insbesondere so ausgewählt, dass sie einen Synergismus entwickeln können, wobei einige der Verbindungen mehrere Funktionen erfüllen können.

Als Kohlenstofflieferant kommen die in intumeszierenden Flammschutzmitteln üblicherweise verwendeten und dem Fachmann bekannten Verbindungen in Betracht, wie stärkeähnliche Verbindungen, z.B. Stärke und modifizierte Stärke, und/oder mehrwertige Alkohole (Polyole), wie Saccharide und Polysaccharide und/oder ein thermoplastisches oder duroplastisches polymeres Harzbindemittel, wie ein Phenolharz, ein Harnstoffharz, ein Polyurethan, Polyvinylchlorid, Poly(meth)acrylat, Polyvinylacetat, Polyvinylalkohol, ein Silikonharz und/oder einen Kautschuk. Geeignete Polyole sind Polyole aus der Gruppe Zucker, Pentaerythrit, Dipentaerythrit, Tripentaerythrit, Polyvinylacetat, Polyvinylalkohol, Sorbitol, EO-PO-Polyole. Bevorzugt werden Pentaerythrit, Dipentaerythrit oder Polyvinylacetat eingesetzt.

Es sei erwähnt, dass das Polymer, welche als Bindemittel dient, im Brandfall selbst auch die Funktion eines Kohlenstofflieferanten haben kann, so dass die Zugabe eines zusätzlichen Kohlenstofflieferanten nicht immer erforderlich ist.

Als Dehydrierungskatalysatoren bzw. Säurebildner kommen die in intumeszierenden Brandschutzformulierungen üblicherweise verwendeten und dem Fachmann bekannten Verbindungen in Betracht, wie ein Salz oder ein Ester einer anorganischen, nicht flüchtigen Säure, ausgewählt unter Schwefelsäure, Phosphorsäure oder Borsäure. Im Wesentlichen werden phosphorhaltige Verbindungen eingesetzt, deren Palette sehr groß ist, da sie sich über mehrere Oxidationsstufen des Phosphors erstrecken, wie Phosphine, Phosphinoxide, Phosphoniumverbindungen, Phosphate, elementarer roter Phosphor, Phosphite und Phosphate. Als Phosphorsäureverbindungen können beispielhaft erwähnt werden: Monoammoniumphosphat, Diammoniumphosphat, Ammoniumphosphat, Ammoniumpolyphosphat, Melaminphosphat, Melaminharzphosphate, Kaliumphosphat, Polyolphosphate wie etwa Pentaerythritphosphat, Glyzerinphosphat, Sorbitphosphat, Mannitphosphat, Dulcitphosphat, Neopentylglykolphosphat, Ethylenglykolphosphat,

Dipentaerythritphosphat und dergleichen. Bevorzugt wird als Phosphorsäureverbindung ein Polyphosphat oder ein Ammoniumpolyphosphat eingesetzt. Unter Melaminharzphosphaten sind dabei Verbindungen wie Umsetzungsprodukte aus Lamelite C (Melamin-Formaldehyd-Harz) mit Phosphorsäure zu verstehen. Als Schwefelsäureverbindungen können beispielhaft erwähnt werden: Ammoniumsulfat, Ammoniumsulfamat, Nitroanilinbisulfat, 4-Nitroanilin-2-sulfonsäure und 4,4-Dinitrosulfanilamid und dergleichen. Als Borsäureverbindung kann Melaminborat beispielhaft erwähnt werden.

Als Gasbildner kommen die üblicherweise in Flammschutzmitteln verwendeten und dem Fachmann bekannten Verbindungen in Betracht, wie Cyanursäure oder Isocyansäure und deren Derivate, Melamin und deren Derivate. Solche sind Cyanamid, Dicyanamid, Dicyandiamid, Guanidin und dessen Salze, Biguanid, Melamincyanurat, Cyansäuresalze, Cyansäureester und -amide, Hexamethoxymethylmelamin, Dimelaminpyrophosphat, Melaminpolyphosphat, Melaminphosphat. Bevorzugt wird Hexamethoxymethylmelamin oder Melamin (Cyanursäureamid) eingesetzt.

Geeignet sind ferner Komponenten, die ihre Wirkungsweise nicht auf eine einzige Funktion beschränkt, wie Melaminpolyphosphat, das sowohl als Säurebildner als auch als Gasbildner wirkt. Weitere Beispiele sind in der GB 2 007 689 A1 , EP 139 401 A1 und US-3 969 291 A1 beschrieben.

In einer Ausführungsform der Erfindung, in der die isolierende Schicht durch physikalische Intumeszenz gebildet wird, umfasst das dämmschichtbildende Additiv mindestens eine thermisch expandierbare Verbindung, wie eine Graphit-Interkalationsverbindung, die auch als Blähgraphit bekannt sind. Diese können ebenfalls im Bindemittel, insbesondere homogen enthalten sein.

Als Blähgraphit kommen beispielsweise bekannte Einlagerungsverbindungen von Schwefelsäure, Salpetersäure, Essigsäure, Lewissäuren und/oder anderen starken Säuren in Graphit in Frage. Diese werden auch als Graphitsalze bezeichnet. Bevorzugt sind Blähgraphite, die bei Temperaturen von beispielsweise 120 bis 350°C unter Aufblähen SO₂, SO₃, CO₂, H₂O, NO und/oder NO₂ abgeben. Der Blähgraphit kann beispielsweise in Form von Plättchen mit einem maximalen Durchmesser im Bereich von 0,1 bis 5 mm vorliegen. Vorzugsweise liegt dieser Durchmesser im Bereich 0,5 bis 3 mm. Für die vorliegende Erfindung geeignete Blähgraphite sind im Handel erhältlich. Im Allgemeinen sind die Blähgraphitteilchen in den erfindungsgemäßen Brandschutzelementen gleichmäßig verteilt.

In einer weiteren Ausführungsform der Erfindung wird die isolierende Schicht sowohl durch chemische als auch durch physikalische Intumeszenz gebildet, so dass das dämmschichtbildende Additiv sowohl einen Kohlenstofflieferanten, einen Dehydrierungskatalysator und ein Gasbildner als auch thermisch expandierbare Verbindungen umfasst.

Prinzipiell kann das dämmschichtbildende Additiv in einem großen gewichtsprozentualen Bereich in der Mehrkomponenten-Zusammensetzung enthalten sein, nämlich bevorzugt in einer Menge von 10 bis 70 Gew.-% bezogen auf das Gesamtgewicht der Mehrkomponenten-Zusammensetzung. Wird die isolierende Schicht durch physikalische Intumeszenz gebildet, ist das dämmschichtbildende Additiv vorzugsweise in einer Menge von 10 bis 40 Gew.-% bezogen auf das Gesamtgewicht der Mehrkomponenten-Zusammensetzung enthalten. Um hier eine möglichst hohe Intumeszenzrate zu bewirken, wird der Anteil des dämmschichtbildenden Additivs in der Gesamtformulierung so hoch wie möglich eingestellt, wobei darauf geachtet werden muss, dass die Viskosität der Zusammensetzung nicht zu hoch wird, damit sich die Zusammensetzung noch gut verarbeiten lässt. Bevorzugt beträgt der Anteil 12 bis 35 Gew.-% und besonders bevorzugt 15 bis 30 Gew.-%, bezogen auf das Gesamtgewicht der Mehrkomponenten-Zusammensetzung.

Da die im Brandfall gebildete Aschekruste in der Regel zu instabil ist und abhängig von deren Dichte und Struktur etwa durch Luftströmungen Verblasen werden kann, was sich negativ auf die isolierende Wirkung der Beschichtung auswirkt, wird zu den eben aufgeführten Komponenten bevorzugt mindestens ein Aschekrustenstabilisator gegeben. Die prinzipielle Wirkungsweise ist dabei die, dass die an sich sehr weichen entstehenden Kohlenstoffschichten durch anorganische Verbindungen mechanisch verfestigt werden. Die Zugabe eines solchen Aschekrustenstabilisators trägt zu einer wesentlichen Stabilisierung der Intumeszenzkruste im Brandfall bei, da diese Additive die mechanische Festigkeit der intumeszierenden Schicht erhöhen und/oder deren Abtropfen verhindern. Als Aschekrustenstabilisatoren bzw. Gerüstbildner kommen die üblicherweise in Brandschutzformulierungen verwendeten und dem Fachmann bekannten Verbindungen in Betracht, beispielsweise Blähgraphit und teilchenförmige Metalle, wie Aluminium, Magnesium, Eisen und Zink. Das teilchenförmige Metall kann in Form eines Pulvers, von Plättchen, Schuppen, Fasern, Fäden und/oder Whiskers vorliegen, wobei das teilchenförmige Metall in Form von Pulver, Plättchen oder Schuppen eine Teilchengrösse von <50 µm, vorzugsweise von 0,5 bis 10 µm besitzt. Im Fall der Verwendung des teilchenförmigen Metalls in Form von Fasern, Fäden und/oder Whiskers ist eine Dicke von 0,5 bis 10 µm und eine Länge von 10 bis 50 µm bevorzugt. Als Aschekrustenstabilisator kann alternativ oder zusätzlich ein Oxid oder eine Verbindung eines Metalls aus der Aluminium, Magnesium, Eisen oder Zink umfassenden Gruppe eingesetzt werden, insbesondere Eisenoxid, vorzugsweise Eisentrioxid, Titandioxid, ein Borat, wie Zinkborat und/oder eine Glasfritte aus niedrig schmelzenden Gläsern mit einer Schmelztemperatur von vorzugsweise bei oder oberhalb 400°C, Phosphat- oder Sulfatgläsern, Melaminpolyzinksulfaten, Ferrogläsern oder Calziumborosilikaten. Die Zugabe eines solchen Aschekrustenstabilisators trägt zu einer wesentlichen Stabilisierung der Aschekruste im Brandfall bei, da diese Additive die mechanische Festigkeit der intumeszierenden Schicht erhöhen und/oder deren Abtropfen verhindern. Beispiele derartiger Additive finden sich auch in US 4 442 157 A, US 3 562 197 A, GB 755 551 A sowie EP 138 546 A1.

Daneben können Aschekrustenstabilisatoren wie Melaminphosphat oder Melaminborat enthalten sein.

Optional können der erfindungsgemäßen Zusammensetzung ein oder mehrere Flammschutzmittel zugesetzt werden, wie Phosphatester, halogenhaltige Verbindungen wie z.B. Tri-(2-chlorisopropyl)-phosphat (TOPP), Tris(2-ethylhexyl)phosphat, Dimethylpropanphosphonat, Triethylphosphat und dergleichen. Einige solcher Verbindungen sind beispielsweise beschrieben in S. V Levchik, E. D Weil, Polym. Int. 2004, 53, 1901-1929 beschrieben. Die Flammschutzmittel können bevorzugt in einer Menge von 3 bis 6 Gew.-%, bezogen auf die gesamte Zusammensetzung, enthalten sein.

Erfindungsgemäß enthält die Zusammensetzung ein Treibmittel, welches ein oder mehrere Verbindungen umfasst, die in der Lage sind durch Reaktion Kohlendioxid (CO₂) freizusetzen. Als Treibmitteln sind alle gängigen chemischen Treibmittel geeignet, die durch chemische Reaktion zwischen zwei Bestandteilen Kohlendioxid freisetzen. Erfindungsgemäß sind die einzelnen Bestandteile des Treibmittels vor der Verwendung der Zusammensetzung reaktionsinhibierend voneinander getrennt.

In der einfachsten Ausgestaltung der Erfindung umfasst das Treibmittel Wasser bzw. besteht aus Wasser, welches nach Vermischen mit dem Isocyanat der Isocyanatkomponente (A) Kohlendioxid freisetzt. Der gewichtsprozentuale Anteil des Wassers beträgt vorzugsweise 0,1 bis 10 Gew.-%, bevorzugter 0,2 bis 8 Gew.-% und weiter bevorzugt 0,2 bis 6 Gew.-% bezogen auf das Gesamtgewicht der Mehrkomponenten- Zusammensetzung.

In einer bevorzugten Ausführungsform der Erfindung umfasst die Mehrkomponenten-Zusammensetzung einen Schaumkatalysator, der die Reaktion des Isocyanats mit Wasser unter Bildung von Kohlendioxid katalysiert. Vorzugsweise werden hierbei N,N,N'-trimethyl-N'-hydroxyethylbisaminoethylether (Jeffcat ZF-10), Bis-(2-dimethylaminoethyl)ether (Jeffcat ZF-20), 70% Bis-(2-dimethylaminoethyl)ether in dipropylenglycol (Jeffcat ZF-22), N-[2-[2-(dimethylamino)ethoxy]ethyl]-N-methyl-1 ,3-Propanediamine (Dabco NE300) eingesetzt.

In einer anderen Ausführungsform umfasst das Treibmittel eine Säure und eine Verbindung, die mit Säuren unter Bildung von Kohlendioxid reagieren kann.

Als Verbindungen, die mit Säuren unter Bildung von Kohlendioxid reagieren können, können carbonat- und hydrocarbonathaltige Verbindungen, insbesondere Metall- oder (insbesondere quarternäre) Ammoniumcarbonate verwendet werden, wie Carbonate von Alkali - oder Erdalkalimetallen, zum Beispiel CaC03, NaHCOs, Na2C03, K2CO3, (NH4) 003und dergleichen, wobei Kreide (CaCOs) bevorzugt ist. Dabei können verschiedene Typen von Kreiden mit unterschiedlichen Korngrößen und unterschiedlicher Oberflächenbeschaffenheit, wie beispielsweise beschichtete oder unbeschichtete Kreide, oder Mischungen von zwei oder mehreren davon verwendet werden. Bevorzugt werden beschichtete Kreidetypen verwendet, da sie langsamer mit der Säure reagieren und somit kontrolliertes Aufschäumen bzw. abgestimmte Aufschäumungs- und Aushärtezeit gewährleisten.

Als Säure kann jede saure Verbindung verwendet werden, die in der Lage ist, mit carbonat- oder hydrogecarbonathaltigen Verbindungen unter Abspaltung von Kohlendioxid zu reagieren, wie etwa Phosphorsäure, Salzsäure, Schwefelsäure, Ascorbinsäure, Polyacrylsäure, Benzoesäure, Toluolsulfonsäure, Weinsäure, Glycolsäure Milchsäure; organische Mono-, Di- oder Polycarbonsäuren, wie Essigsäure, Chloressigsäure, Trifluoressigsäure, Fumarsäure, Maleinsäure, Zitronensäure oder dergleichen, Aluminiumdihydrogenphosphat, Natriumhydrogensulfat, Kaliumhydrogensulfat, Aluminiumchlorid, Harnstoffphosphat und andere säurefreisetzende Chemikalien oder Mischungen von zwei oder mehreren davon. Die Säure erzeugt das Gas als eigentliches Treibmittel.

Als Säure-Komponente kann eine wässrige Lösung einer anorganischen und/oder organischen Säure, benutzt werden. Ferner können gepufferte Lösungen von Zitronen-, Wein-, Essig-, Phosphorsäure und dergleichen verwendet werden.

Um dem gebildeten Schaum eine höhere Stabilität zu verleihen, müssen die gebildeten Zellen bis zur Aushärtung des Bindemittels stabil bleiben, um den Kollaps der polymeren Schaumstruktur zu verhindern. Eine Stabilisierung wird umso notwendiger, je niedriger die Dichte des Schaumstoffes sein soll, d.h. je größer die Volumenexpansion ist. Eine Stabilisierung wird gewöhnlich mittels Schaumstabilisatoren erreicht.

Sofern erforderlich kann die erfindungsgemäße Zusammensetzung daher ferner einen Schaumstabilisator enthalten. Als Schaumstabilisatoren eignen sich beispielsweise Alkylpolyglycoside. Diese sind nach dem Fachmann an sich bekannten Methoden durch Umsetzung von längerkettigen Monoalkoholen mit Mono-, Di- oder Polysacchariden erhältlich. Die längerkettigen Monoalkohole, die gegebenenfalls auch verzweigt sein können, weisen bevorzugt 4 bis 22 C-Atome, bevorzugt 8 bis 18 C-Atome und besonders bevorzugt 10 bis 12 C-Atome in einem Alkylrest auf. Im Einzelnen genannt seien als längerkettige Monoalkohole 1-Butanol, 1-Propanol, 1-Hexanol, 1-Oktanol, 2-Ethylhexanol, 1-Decanol, 1-Undecanol, 1-Dodecanol (Laurylalkohol), 1-Tetradecanol (Myristylalkohol) und 1- Octadecanol (Stearylalkohol). Es können auch Gemische der genannten längerkettigen Monoalkohole eingesetzt werden. Weitere Schaumstabilisatoren umfassen an sich bekannte anionische, kationische, amphotere und nichtionische Tenside sowie Mischungen hieraus. Bevorzugt werden Alkylpolyglycoside, EO/PO-Blockcopolymere, Alkyl- oder Arylalkoxylate, Siloxanalkoxylate, Ester der Sulfobernsteinsäure und/oder Alkali- oder Erdalkalimetallalkanoate eingesetzt. Besonders bevorzugt werden EO/PO-Blockcopolymere eingesetzt.

Die Schaumstabilisatoren können in irgendeiner der Komponenten der erfindungsgemäßen Mehrkomponenten-Zusammensetzung enthalten sein, so lange diese nicht miteinander reagieren.

In einer Ausführungsform enthält die erfindungsgemäße Zusammensetzung ferner mindestens einen weiteren Bestandteil, ausgewählt unter Weichmachern, Vernetzungsmitteln, Bioziden, organischen und/oder anorganischen Zuschlagstoffen und/oder weiteren Additiven.

Der Weichmacher hat die Aufgabe, das ausgehärtete Polymernetzwerk weich zu machen. Ferner hat der Weichmacher die Aufgabe, eine zusätzliche flüssige Komponente einzubringen, so dass die Füllstoffe vollständig benetzt werden und die Viskosität so eingestellt wird, dass die Beschichtung verarbeitungsfähig wird. Der Weichmacher kann in solch einer Menge in der Zusammensetzung enthalten sein, dass er die eben beschriebenen Funktionen hinreichend erfüllen kann.

Geeignete Weichmacher sind unter Derivaten der Benzoesäure, Phthalsäure, z.B. Phthalate, wie Dibutyl-, Dioctyl-, Dicyclohexyl-, Diisooctyl-, Diisodecyl-, Dibenzyl- oder Butylbenzylphthalat, Trimellitsäure, Pyromellitsäure, Adipinsäure, Sebacinsäure, Fumarsäure, Maleinsäure, Itaconsäure, Caprylsäure und Zitronensäure, Alkylphosphatestern und Derivaten von Polyestern und Polyethern, epoxidierten Ölen, Cio-C2i-Alkylsulfonsäureestern des Phenols und Alkylestern ausgewählt. Bevorzugt ist der Weichmacher ein Esterderivat der Terephthalsäure, ein Triol-Ester der Caprylsäure, ein Glykoldiester, Diol-Ester aliphatischer Dicarbonsäuren, Esterderivat der Zitronensäure, sekundärer Alkylsulfonsäureester, Esterderivate des Glycerins mit Epoxidgruppen und Esterderivate der Phosphate. Stärker bevorzugt ist der Weichmacher Bis(2-ethylhexyl)terephthalat, T rihydroxymethylpropylcaprylat,

Triethylenglycol-bis(2-ethylhexanoat), 1 ,2-Cyclohexandicarboxylsäure-diisononylester, ein Gemisch aus 75-85 % sekundärer Alkylsulfonsäureester, 15-25 % sekundärer Alkandisulfonsäurediphenylester sowie 2-3 % nicht sulfonierter Alkane, Triethylcitrat, epoxidiertes Sojabohnenöl, Tri-2-ethylhexylphosphat oder ein Gemisch aus n-Octyl- und n-Decylsuccinat. Am stärksten bevorzugt ist der Weichmacher ein Phosphatester, da diese sowohl als Weichmacher als auch als Flammschutzmittel wirken können.

In der Zusammensetzung kann der Weichmacher bevorzugt in einer Menge bis zu 30 Gew.-%, weiter bevorzugt bis zu 20 Gew.-% und stärker bevorzugt bis zu 8 Gew.-%, bezogen auf die gesamte Zusammensetzung, enthalten sein.

Die Zusammensetzung kann neben den bereits beschriebenen Additiven gegebenenfalls übliche Hilfsmittel wie Netzmittel, etwa auf Basis von Polyacrylaten und/oder Polyphosphaten, Farbstoffe, Fungizide, oder diverse Füllstoffe, wie Vermiculit, anorganische Fasern, Quarzsand, Mikroglaskugeln, Glimmer, Siliziumdioxid, Mineralwolle, und dergleichen enthalten.

Zusätzliche Additive, wie Verdicker und/oder Rheologieadditive, sowie Füllstoffe können der Zusammensetzung zugegeben werden. Als Rheologieadditive, wie AntiAbsetzmittel, Antiablaufmittel und Thixotropiermittel, werden vorzugsweise Polyhydroxycarbonsäureamide, Harnstoffderivate, Salze ungesättigter Carbonsäureester, Alkylammoniumsalze saurer Phosphorsäurederivate, Ketoxime, Aminsalze der p-Toluolsulfonsäure, Aminsalze von Sulfonsäurederivaten sowie wässrige oder organische Lösungen oder Mischungen der Verbindungen verwendet werden verwendet. Daneben können Rheologieadditive auf Basis pyrogener oder gefällter Kieselsäuren oder auf Basis silanisierter pyrogener oder gefällter Kieselsäuren eingesetzt werden. Bevorzugt handelt es sich bei dem Rheologieadditiv um pyrogene Kieselsäuren, modifizierte und nicht modifizierte Schichtsilikate, Fällungskieselsäuren, Celluloseether, Polysaccharide, PU- und Acrylatverdicker, Harnstoffderivate, Rizinusölderivate, Polyamide und Fettsäureamide und Polyolefine, soweit sie in fester Form vorliegen, pulverisierte Cellulosen und/oder Suspensionsmittel wie z.B. Xanthan Gummi.

Die erfindungsgemäße Zusammensetzung kann als Zwei- oder Mehrkomponenten-System konfektioniert sein, wobei der Begriff Mehrkomponentensystem auch Zweikomponentensysteme mit umfasst. Die Zusammensetzung ist bevorzugt als Zweikomponenten-System konfektioniert, in dem die einzelnen Bestandteile des Treibmittels vor der Verwendung der Zusammensetzung reaktionsinhibierend voneinander getrennt sind und die Isocyanatverbindungen vor der Verwendung der erfindungsgemäßen Zusammensetzung reaktionsinhibierend, von der gegenüber Isocyanatgruppen reaktiven Komponente B getrennt sind.

Die weiteren Bestandteile der Zusammensetzung sind entsprechend ihrer Verträglichkeit untereinander und mit den in der Zusammensetzung enthaltenen Verbindungen aufgeteilt und können in einer der beiden Komponenten oder in beiden Komponenten enthalten sein. Ferner kann die Aufteilung der weiteren Bestandteile, insbesondere der festen Bestandteile davon abhängen, in welchen Mengen diese in der Zusammensetzung enthalten sein soll. Durch entsprechende Aufteilung kann sich gegebenenfalls ein höherer Anteil, bezogen auf die gesamte Zusammensetzung ergeben. Das dämmschichtbildende Brandschutzadditiv kann dabei als Gesamtmischung oder in Einzelkomponenten aufgeteilt in einer Komponente oder mehreren Komponenten enthalten sein. Die Aufteilung erfolgt abhängig von der Verträglichkeit der in der Zusammensetzung enthaltenen Verbindungen, so dass weder eine Reaktion der in der Zusammensetzung enthaltenen Verbindungen untereinander bzw. eine gegenseitige Störung noch eine Reaktion dieser Verbindungen mit den Verbindungen der anderen Bestandteile erfolgen kann. Dies ist von den verwendeten Verbindungen abhängig.

Ein weiterer Gegenstand der vorliegenden Erfindung ist auch ein aus der erfindungsgemäßen Mehrkomponenten-Zusammensetzung hergestelltes Brandschutzprofil. Die Herstellung der erfindungsgemäßen Brandschutzprofile erfolgt durch das Vermischen der Komponenten der erfindungsgemäßen Mehrkomponenten-Zusammensetzung. In Folge der Reaktion der Komponenten erfolgt ein Aufschäumen.

Vorzugsweise erfolgt die Herstellung der erfindungsgemäßen Brandschutzprofile in einer Endlosproduktion, bei dem am Ende die Brandschutzprofile auf die gewünschte Länge vereinzelt werden. Um dem Brandschutzprofil die gewünschte Form zu geben können beim Aufschäumen allseitig anliegenden Stützelemente verwendet werden.

Das Brandschutzprofil hat vorzugsweise einen rechteckigen Querschnitt. Dadurch lassen sich die Brandschutzprofile besonders einfach und lückenlos in einem Wand- oder Deckendurchbruch verarbeiten.

Die Brandschutzprofilstucke können auf eine Länge von beispielsweise 80 cm zugeschnitten werden, um ein einfaches Handling beim Verpacken und beim Transport zu ermöglichen. Vor der Installation können die Profilstücke von einem Benutzer bei Bedarf zu kürzeren Stücken zugeschnitten werden.

Ein weiterer Gegenstand der vorliegenden Erfindung ist auch die Verwendung von temperaturregulierenden Füllstoffen in Brandschutzprofilen, insbesondere in Brandschutzprofilen mit einer geringen Dichte zur Verbesserung der Feuerwiderstandsdauer. Die Brandschutzprofile weisen im ausgehärteten Zustand bevorzugt eine Dichte zwischen 100 kg/m³ und 200 kg/m³ auf. Vorzugsweise umfasst das Brandschutzprofil Polyurethan und/oder Polyharnstoff als Bindemittel. Soweit anwendbar gelten in diesen Fällen alle vorstehenden Ausführungen.

Die Erfindung wird im Folgenden anhand einer Reihe von Beispielen näher erläutert. Alle Beispiele und Abbildungen stützen den Umfang der Ansprüche. Die Erfindung ist jedoch nicht auf die spezifischen, in den Beispielen und Abbildungen gezeigten Ausführungsformen beschränkt.

### AUSFÜHRUNGSBEISPIELE

Alle hier aufgelisteten Bestandteile der Zusammensetzungen sind - soweit nicht anders angegeben - kommerziell erhältlich und wurden in der kommerziell üblichen Qualität eingesetzt.

Alle in den Beispielen gemachten %-Angaben beziehen sich auf das Gesamtgewicht der beschriebenen Zusammensetzung als Kalkulationsbasis, soweit nicht anders angegeben.

Liste der in den Beispielen und Referenzen verwendeten Bestandteile (Erklärung der Abkürzungen) sowie ihrer Handelsnamen und Bezugsquellen:

**Tabelle 1: Zusammenstellung der in den Beispielen verwendeten Bestandteile**

| | **Beschreibung** |
|---|---|
| Desmophen 5168 T | Polypropylen ether polyol (Fa. Covestro) |
| Wasser | H₂O (Leitungswasser) |
| Dabco 33 LV | Oxydipropanol 67% + 1,4-Diazabicyclooctan 33% (Fa. Evonik) |
| Jeffcat ZF 10 | 2-(2-/2-Dimethylaminoethoxy)-ethylmethylamino)-ethanol (Fa. Huntsman) |
| Kropfmühl ES 700 FS pH | Blähgraphit (Fa. Kropfmühl) |
| Desmodur 44V20L | Methylendiphenylisocyanate (Fa. Covestro) |
| Casul H1i | Ettringit mit der Strukturformel 3 Ca•Al₂O₃•3 CaSO₄•32 H₂O (Ettringit) (Fa. Remondis Production GmbH); Kristallwasseranteil 45% |
| Pural MG 70 | Aluminum-Magensiumhydroxycarbonat mit einem 70:30 Verhältnis an MgO:Al2O3 (Fa. Sasol) |
| Spezial-Ziegelfeinmehl 0 - 3 mm | Ziegelmehl mit einer Korngröße von ≤ 3 mm (Fa. Peter Stadler GmbH) |
| Aerogel Particles P100 | Aerogel auf Silikatbasis (Fa. Cabot) |

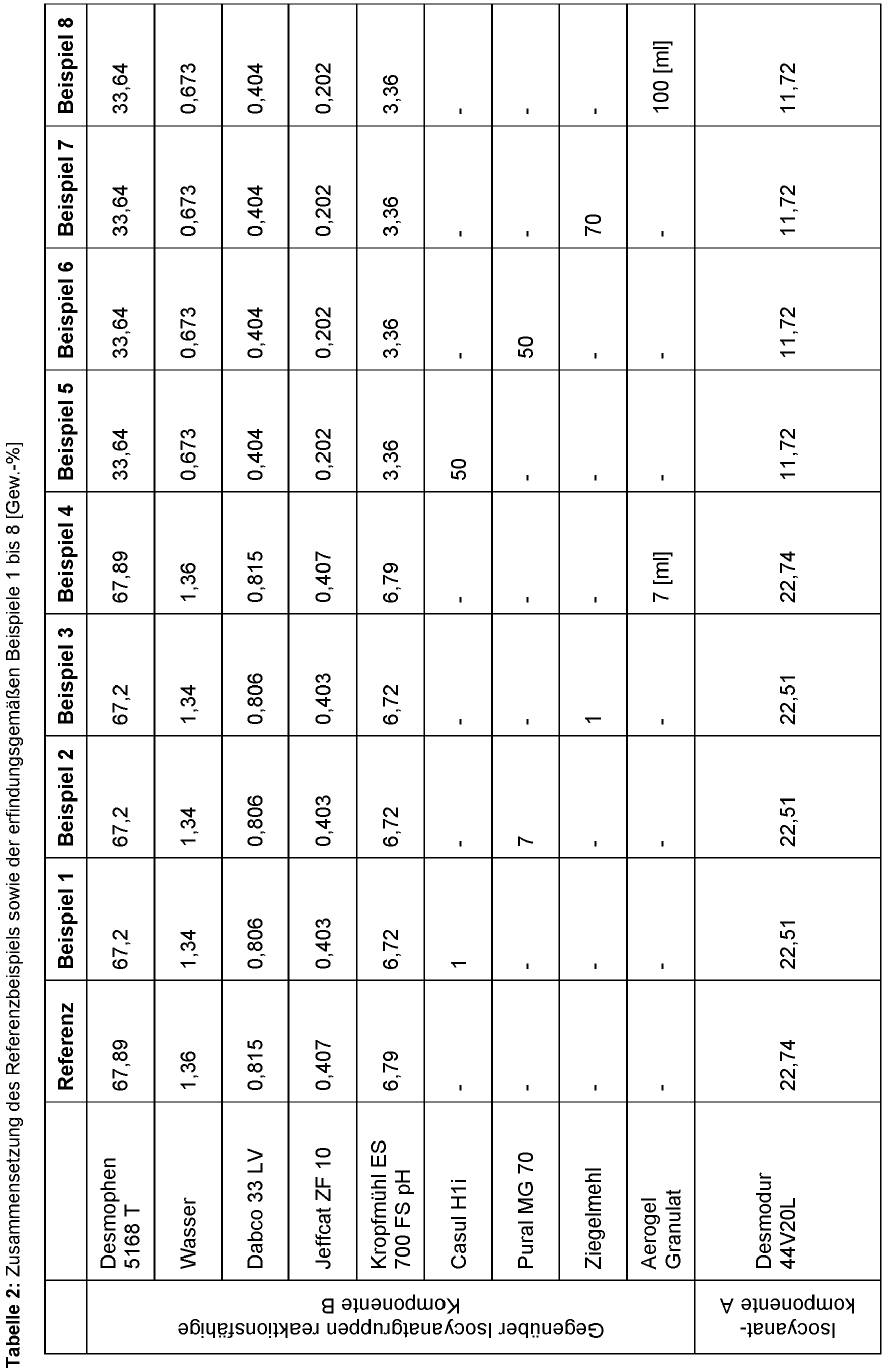

### Herstellung der gegenüber Isocyanatgruppen reaktionsfähige Komponente B

In einem Becher wird zunächst das Polyol vorgelegt und anschließend werden Wasser und die Katalysatoren hinzugegeben. Die Mischung wird für 20 Sekunden mit einem Spatel verrührt, bis eine homogene Flüssigkeit entsteht. Anschließend wird der expandierende Blähgraphit hinzugefügt und die Mischung wird gerührt, bis eine homogene Masse entsteht. Anschließend werden die endothermen Füllstoffe und/oder die Füllstoffe mit geringer Wärmekapazität hinzugefügt und erneut wird die Zusammensetzung bis zur Homogenität gerührt.

### Herstellung eines Becherschaumes

Zur Herstellung eines Becherschaumes werden in einem Becher mit einem Volumen von 580 ml 100g Schaumformulierung vorbereitet. Hierzu wird die Isocyanatkomponente A zur Komponente B hinzugegeben und für 5 Sekunden mit schnellen Rührbewegung eingerührt. Anschließend wird abgewartet bis der Schaum seine vollständige Höhe erreicht hat und ausgehärtet ist. Das Ende der Reaktion ist erreicht, wenn der Schaum nicht mehr klebrig ist, üblicherweise nach 40 Sekunden.

### Tonnenofentest

Zur Durchführung eines sogenannten Tonnenofentest wird ein Porenbetonblock mit den Maßen 300 × 300 × 70 mm³ (B × L × H) vorbereitet. In diesen werden mit einer Lochsäge vier Löcher mit je einem Durchmesser von 8 cm vorbereitet, sodass sie ein Volumen von 140,7 ml vorweisen. Der Block wird auf eine flache Fläche platziert, sodass die zylindrischen Löcher nach unten begrenzt sind. In einem Becher werden die Komponente B und die Isocyanatkomponente A gemäß Tabelle 2 vermischt, ca. 5 Sekunden verrührt und direkt in eines der Löcher gegossen. Anschließend wird das Loch von oben mit einem Gewicht von min. 1 kg verschlossen, sodass der Schaum nicht über die Zylinderform hinaus schäumen kann. Nach ca. 40 Sekunden kann das Gewicht entfernt werden. Der entstandene Schaum sollte den Zylinder komplett ausfüllen und eine Dichte von 130 g/L haben. Nach dem Befüllen aller Öffnungen wird der Block in die dafür vorgesehene Öffnung eines Gas-Toplader Topfbrenners G80 der Firma Rhode platziert. So kann der Wärmeübertrag auf die Nicht-Feuer Seite gemessen werden. Auf der Außenseite werden mittig auf den Schaumzylindern Thermoelemente befestigt. Anschließend wird ein vordefiniertes Temperaturprogramm abgefahren. Die hierfür benötigte Gasflamme wird gestartet und der Ofen heizt in den ersten 10 Minuten von Raumtemperatur auf eine Temperatur von 650 °C auf. Über die nächsten 50 Minuten nimmt die Temperatur weiterhin kontinuierlich zu bis sie nach 1 Stunde ungefähr einen Wert von 950 °C erreicht Zur Auswertung werden die Temperaturwerte der Thermoelemente nach 60 Minuten verwendet und relativ zur Referenz ausgewertet. Die Ergebnisse sind in der nachfolgenden Tabelle dargestellt (Zusammensetzungen s.o. Tabelle 2):

**Tabelle 3: Ergebnisse des Tonnenofentests**

| Formulation | Temperatur nach 60 min [°C] | [%] Temperatur im Verhältnis zur Referenz |
|---|---|---|
| Referenz | 294,3 | 100 |
| Beispiel 1 (1 Gew.-% Casul H1i) | 197,8 | 67 |
| Beispiel 2 (7 Gew.-% Pural MG 70) | 199,8 | 68 |
| Beispiel 3 (1 Gew.-% Ziegelmehl) | 241,7 | 82 |
| Beispiel 4 (7 ml Aerogel) | 160,3 | 54 |

### Thermogravimetrische Analyse (TGA) der Füllstoffe

Für die thermogravimetrische Analyse wird der zu messende Füllstoff in einer Menge von ca. 50 mg in einen Probentiegel mit Hilfe eines Spatels eingewogen. Anschließend wird die Probe in einem TGA/DSC3+ Gerät der Firma Mettler Toledo platziert. Die Probe wird bei einer Heizrate von 10K/min in einem Temperaturbereich von 30 °C bis 1100°C in Luftatmosphäre aufgeheizt. Der Gewichtsverlust der Probe wird im Zuge des Aufheizprogramms aufgezeichnet.

Mittels thermogravimetrischer Analyse (TGA) wurden die in der nachfolgenden Tabelle dargestellten Onset-Temperaturen der temperaturregulierenden Füllstoffe ermittelt:

**Tabelle 4: Bestimmung der Onset-Temperatur mittels TGA-Analyse**

| **Temperaturregulierender Füllstoff** | **Onset-Temperatur (TGA)** |
|---|---|
| Casul H1i | 96 °C |
| Plural MG 70 | 181 °C |

## Patentansprüche

1. Schäumbare Mehrkomponenten-Zusammensetzung umfassend
i) mindestens eine Isocyanatkomponente A enthaltend mindestens ein Polyisocyanat,
ii) mindestens eine reaktionsinhibierend von der Isocyanatkomponente A getrennt gelagerte gegenüber Isocyanatgruppen reaktionsfähige Komponente B enthaltend mindestens eine Verbindung ausgewählt aus der Gruppe bestehend aus Verbindungen mit mindestens zwei Aminogruppen, Polyolen und Kombinationen davon,
iii) mindestens ein dämmschichtbildendes Brandschutzadditiv, sowie
iv) ein Treibmittel umfassend ein oder mehrere Verbindungen, die in der Lage sind durch Reaktion CO₂ freizusetzen,
wobei die einzelnen Bestandteile des Treibmittels vor der Verwendung der Mehrkomponenten-Zusammensetzung reaktionsinhibierend voneinander getrennt sind,
**dadurch gekennzeichnet, dass**
die Isocyanatkomponente A und/oder die gegenüber Isocyanatgruppen reaktionsfähige Komponente B mindestens einen temperaturregulierenden Füllstoff umfasst.

2. Schäumbare Mehrkomponenten-Zusammensetzung gemäß Anspruch 1, **dadurch gekennzeichnet, dass** der temperaturregulierende Füllstoff ausgewählt ist aus der Gruppe bestehend aus endothermen Füllstoffen, Füllstoffen mit einer Wärmeleitfähigkeit von < 1 W m⁻¹ K⁻¹ oder Mischungen daraus.

3. Schäumbare Mehrkomponenten-Zusammensetzung gemäß Anspruch 2, **dadurch gekennzeichnet, dass** der temperaturregulierende Füllstoff ein endothermer Füllstoff ist und die endotherme Reaktion des endothermen Füllstoffs in einem Temperaturbereich von 70 °C bis 300 °C einsetzt.

4. Schäumbare Mehrkomponenten-Zusammensetzung gemäß einem der vorhergehenden Ansprüche, **dadurch gekennzeichnet, dass** der endotherme Füllstoff mindestens eine Hydratwasser umfassende kristalline oder teilkristalline anorganische Verbindungen enthält.

5. Schäumbare Mehrkomponenten-Zusammensetzung gemäß Anspruch 4, **dadurch gekennzeichnet, dass** die Hydratwasser umfassende kristalline oder teilkristalline anorganische Verbindung ausgewählt ist aus der Gruppe bestehend aus Ettringiten, geschichteten Doppelhydroxiden (LDH) oder Mischungen daraus.

6. Schäumbare Mehrkomponenten-Zusammensetzung gemäß Anspruch 2, **dadurch gekennzeichnet, dass** der temperaturregulierende Füllstoff ein Füllstoff mit einer Wärmeleitfähigkeit <1 W m⁻¹ K⁻¹ ist und ausgewählt ist aus der Gruppe bestehend aus Ziegelmehl, Aerogelen oder Mischungen daraus.

7. Schäumbare Mehrkomponenten-Zusammensetzung gemäß einem der vorhergehenden Ansprüche, **dadurch gekennzeichnet, dass** der gewichtsprozentuale Anteil des temperaturregulierenden Füllstoffs in einem Bereich von 1 bis 70 Gew.-% bezogen auf das Gesamtgewicht der schäumbaren Mehrkomponenten-Zusammensetzung liegt.

8. Schäumbare Mehrkomponenten-Zusammensetzung gemäß einem der vorhergehenden Ansprüche, **dadurch gekennzeichnet, dass** die Mehrkomponenten-Zusammensetzung sowohl einen endothermen Füllstoff als auch einen Füllstoff mit einer Wärmeleitfähigkeit < 1 W m⁻¹ K⁻¹ umfasst.

9. Schäumbare Mehrkomponenten-Zusammensetzung gemäß Anspruch 8, **dadurch gekennzeichnet, dass** der endotherme Füllstoff und der Füllstoff mit einer Wärmeleitfähigkeit < 1 W m⁻¹ K⁻¹ in einem gewichtsprozentualen Verhältnis von 1:1 eingesetzt werden.

10. Schäumbare Mehrkomponenten-Zusammensetzung gemäß einem der vorhergehenden Ansprüche **dadurch gekennzeichnet, dass** das Treibmittel Wasser umfasst.

11. Schäumbare Mehrkomponenten-Zusammensetzung gemäß einem der vorhergehenden Ansprüche, **dadurch gekennzeichnet, dass** das dämmschichtbildende Brandschutzadditiv aus Graphit-Interkallationsverbindungen, blähfähigem silikatischen Material oder Kombinationen davon ausgewählt ist.

12. Brandschutzprofil hergestellt aus einer schäumbaren Mehrkomponenten-Zusammensetzung gemäß einem der vorhergehenden Ansprüche.

13. Brandschutzprofil gemäß Anspruch 12, **dadurch gekennzeichnet, dass** das Brandschutzprofil im ausgehärteten Zustand eine Dichte zwischen 100 kg/m³ und 200 kg/m³ aufweist.

14. Verwendung mindestens eines temperaturregulierenden Füllstoffs in Brandschutzprofilen, insbesondere in Brandschutzprofilen mit einer geringen Dichte, zur Verbesserung der Feuerwiderstandsdauer im Brandfall.

15. Verwendung gemäß Anspruch 14, **dadurch gekennzeichnet, dass** das Brandschutzprofil einen Polyurethanschaum und/oder einen Polyharnstoffschaum umfasst.
